# EUROPEAN PATENT SPECIFICATION

(11) **EP 4 031 317 B1**
(45) Date of publication and mention of the grant of the patent: **25.12.2024**
(21) Application number: 20780598.7
(22) Date of filing: 18.09.2020
(51) Int. Cl.: B23K 26/082, B23K 26/04, B23K 26/046, B23K 26/352, B23K 26/359, B23K 26/362, G02B 26/10

(54) **ELECTROMAGNETIC RADIATION SYSTEM**
ELEKTROMAGNETISCHES STRAHLUNGSSYSTEM
SYSTÈME DE RAYONNEMENT ÉLECTROMAGNÉTIQUE

(30) Priority: 20.09.2019 GB 201913631
(43) Date of publication of application: 27.07.2022
(73) Proprietor: ALLTEC ANGEWANDTE LASERLICHT TECHNOLOGIE GMBH, 23923 Selmsdorf (DE)
(72) Inventor: KUECKENDAHL, Peter, J., 23843 Bad Oldesloe (DE); SEUTHE, Christian, 23923 Selmsdorf (DE)
(74) Representative: Marks & Clerk LLP
(86) International application number: PCT/EP2020/076149
(87) International publication number: WO 2021/053168

(56) References cited:
- CN-A- 109 954 968
- CN-U- 206 764 138
- CN-Y- 201 371 313
- DE-A1- 102004 027 621
- JP-A- 2004 029 109
- JP-A- 2006 326 603
- JP-A- 2008 290 137
- JP-A- H0 731 119
- US-A1- 2008 023 455
- US-A1- 2008 210 886
- US-A1- 2018 369 964
- US-B1- 9 366 860

## Description

### TECHNICAL FIELD

The present invention relates to an electromagnetic radiation system for directing an electromagnetic radiation beam at a target. The electromagnetic radiation system may be a marking head for projecting a radiation beam onto a target such as, for example, a product that is to be marked by said radiation beam. Aspects and implementations of the present disclosure are directed generally to laser scanning and laser marking equipment.

### BACKGROUND

Current laser markers and scanners are limited during automated production operations in packaging as well as in parts marking production lines. Current laser markers and scanners are typically fixed into production systems relative to articles being marked.

In order for a marking head to mark a product correctly, the marking head may have to be a pre-determined distance away from the product. A known method of introducing the pre-determined distance between the marking head and the target involves inserting a physical object such as a ruler between the marking head and the target. The physical object has a length that is substantially equal to the pre-determined distance. The distance between the marking head and the target may be manually adjusted such that the only thing separating the marking head and the target is the physical object. The physical object may then be removed and the marking head will be the pre-determined distance away from the target. This is a slow, laborious and inaccurate method of introducing the pre-determined distance between the marking head and the target.

Another prior art method of introducing the pre-determined distance between the marking head and the target involves providing two light emitting diodes on the marking head. Each diode is located on opposite sides of the marking head. The diodes emit converging radiation beams. The diodes are carefully positioned and installed on the marking head with knowledge of the pre-determined distance such that the radiation beams emitted by the diodes coincide with one another at the pre-determined distance. The distance between the marking head and the target may be manually adjusted until the radiation beams emitted by the diodes coincide with one another at the target. This is a complicated and expensive system. The two diodes increase the size and weight of the marking head, thereby reducing the flexibility of use of the marking head in production lines that include restricted spaces. In addition, use of this prior art system requires an initial calibration of three different radiation beam paths (i.e. the normal marking beam path of the marking head and the two calibration beam paths of the diodes). This involves a complicated and time-consuming installation and calibration process to ensure that the radiation beam emitted by the diodes coincide with one another at the correct distance.

CN201371313 discloses a laser processing device, in particular to a laser processing twin-beam reference light device. In virtue of a beam splitting system, the reference light device improves the single-beam reference light of the traditional laser processing device into the twin-beam reference light. By the control over the beam splitting system, the intersection of two reference beams is caused to coincide with a laser focus position. Consequently, the position relation between a workpiece and the laser focus can be judged by observing the light spot status of the twin-beam reference light on the workpiece, thus achieving the objective of only needing to observe the light spot status of the twin-beam reference light on the workpiece without need of using other tools to measure focal position during laser processing. The method for indicating the focal position through the intersection of two beams has the advantages of simple structure, high accuracy, convenient operation, wide applicable range, etc.

DE102004027621 discloses a device having a laser beam source that is designed, in such a manner that marking beams are present in the form of a transverse ring mode. A deflection device is used for deflection of the marking beams produced by the laser beam source to a carrier for the object to be marked. The marking beams are deflected to the object on the carrier, and the object is marked. An independent claim is also included for a laser beam marking procedure.

US2008023455 discloses a method of setting processing data for a computer-assisted laser processing apparatus, along with a system for setting a laser processing data. The method comprises a function of setting a three-dimensional profile of an object and a processing pattern as processing conditions, a function of generating processing data representing the processing conditions for the object, and a function of visually displaying a two dimensional representation of the processing data on a display screen and a function of setting a three-dimensional profile of an object and a processing pattern as processing conditions, wherein it is enabled to set the three-dimensional profile and the processing pattern while displaying the object in two dimensions on the display screen disposed within a processing zone.

CN206764138 discloses a laser mark printing device that focusing is adjusted using a radiation beam, including galvanometer system, the transmitter being arranged on the left of galvanometer system, the field lens being arranged on below galvanometer system, in the galvanometer system the first scanning galvanometer, light combination mirror, the second scanning galvanometer are disposed with according to the light path of transmitter transmitting, in the vertical direction regulation mirror corresponding with light combination mirror is provided with the left of the field lens, the regulation mirror is embedded to be set on a revolving stage. The utility model is by the way that the radiation beam is divided, the light splitting of an original radiation beam light path is turned into two radiation beam light paths, recycle regulation mirror, the intersection point for obtaining two radiation beam light paths comes the quick position for determining focus, it is fixed value that the field lens of different breadths, which focuses on back focal length, the position of focus is determined to the surface of the workpiece of different-thickness by the column up-down scan of regulating system, so that the operating efficiency of lifting operation personnel at double, gives the inexpensive solution of user.

US2018369964 discloses a laser cutting head with movable mirrors used to move a beam to provide beam alignment and/or to provide different wobble patterns for cutting with different kerf widths. The laser cutting head includes a cutting nozzle for directing the laser beam together with a gas to a workpiece for cutting. The movable mirrors provide a wobbling movement of the beam within a relatively small field of view, for example, within an aperture of the cutting nozzle. The movable mirrors may be galvanometer mirrors that are controllable by a control system including a galvo controller. The control system may also be used to control the fiber laser, for example, in response to the position of the beams relative to the workpiece and/or a sensed condition in the cutting head such as a thermal condition proximate one of the mirrors.

JP2004029109 discloses a scanner which shortens mirror positioning time and improves the positioning accuracy of a laser beam, and a method for preventing the torsional vibration of the mirror in the scanner device. The mirror is attached to either end of the rotary shaft of a laser scanner, and the glass disk of a laser encoder is fixed on the other end thereof. For example, when an anti-resonance point having a little higher frequency than a resonance point in the primary mode of torsional vibration around the shaft exists, the node of torsion in the primary mode is positioned in the vicinity of the glass disk, and an angle sensor side and a movable coil side are torsionally vibrated in reverse phases to each other while putting the node of torsion in between. In such a case, the node of torsion is made to go away from the glass disk by fixing an inertial load near the mirror, and is moved to the inside of a movable coil, especially, to the vicinity of the centre of the coil.

US9366860 discloses a galvanometer-based optical scanner which limits a range of mirror rotation angles and includes posts extending from an adjustable base to define a range of angles for rotation of the mirror and cushioning carried by the posts for softening an impact of the mirror when making contact with the posts. A band of rubber-like material is placed around the posts to provide the cushioning. Operation of the scanner is such that an adjustable mirror stop is provided which does not stop rotation of the rotor itself, but stops rotation of the mirror.

It is in object of the present invention to provide an electromagnetic radiation system for directing an electromagnetic radiation beam at a target that obviates or mitigates one or more problems of the prior art whether identified herein or elsewhere.

### SUMMARY

Aspects and embodiments disclosed herein provide for the easy integration and operation of optical scanning or marking systems, for example, laser scanning or marking systems, into production systems.

According to a first aspect of the invention, there is provided an electromagnetic radiation system for directing an electromagnetic radiation beam at a target according to claim 1, having a first arrangement in which the radiation beam is directed along a marking beam path that is within a marking range of the electromagnetic radiation system and a second arrangement in which the radiation beam is directed along a different beam path that is not within the marking range of the electromagnetic radiation system, wherein a positional relationship between the marking beam path and the different beam path satisfies a pre-determined condition at the target when the electromagnetic radiation system is at a pre-determined distance from the target.

The electromagnetic radiation system may be a marking head for marking a target such as a product on a production line. By identifying whether or not the pre-determined condition has been satisfied, it is possible to identify that the marking head is at a pre-determined distance from the target. That is, by providing the different beam path in addition to the marking beam path, knowledge of the positional relationship between the beam paths can be used to guide a user during a setup process to arrive at a desired configuration.

The marking head may comprise two modes of operation, namely a calibration mode and a marking mode. The calibration mode may comprise the marking head emitting a calibration radiation beam whilst a user adjusts a distance between the marking head and the target until the pre-determined condition is satisfied. The marking mode may comprise the marking head projecting a marking radiation beam along a marking beam path to form a mark on the target after the pre-determined condition has been satisfied. The calibration radiation beam may be different to the marking radiation beam. For example, the marking radiation beam may have a greater intensity than the calibration radiation beam. The marking radiation beam may have a different wavelength than the calibration radiation beam. For example, the marking radiation beam may comprise infrared radiation, whereas the calibration radiation beam may comprise radiation having a wavelength within the visible spectrum. The calibration radiation beam may comprise green light. The green light may have a wavelength of about 450 nm or more. The green light may have a wavelength of about 600 nm or less. The green light may have a wavelength of about 550 nm. A human eye has a greater spectral sensitivity to green light than other colours of visible light. That is, the human eye may detect green light as being brighter (and therefore more visible) than an equivalent power of another colour of visible light. As such, green light reflecting from a surface is more visible to a user across a larger range of materials and/or ambient light conditions than equivalent powers of different colours of light (e.g. red light, blue light, etc.). Thus, using green light advantageously makes positions of the calibration radiation beam easier to see on the target across a wider range of target materials (e.g. less reflective targets and/or darker targets) and ambient lighting conditions (e.g. brighter ambient lighting conditions). This in turn may advantageously improve an accuracy with which a correct configuration (e.g. positioning the system at a correct focal length) of the electromagnetic radiation system may be found.

The pre-determined distance between the marking head and the target may correspond to an acceptable marking configuration of the marking head with respect to the target. For example, when the marking head is at the pre-determined distance from the target, a cross-sectional area of the radiation beam at the target may be within an acceptable range of values and/or an intensity (i.e. power transferred per unit area) of the radiation beam at the target may be within an acceptable range of values and/or the pre-determined distance may correspond to a focal length of the marking head. The acceptable marking configuration may be selected in at least partial dependence on a mark that is to be formed using the radiation beam, a material of a product that is to be marked using the radiation beam, a speed of the product on a production line, a power of a radiation source generating the laser beam, a wavelength of the radiation beam, etc.

The marking beam path may correspond to a beam path of radiation taken when the marking head is marking a product (i.e. a "normal use" beam path). That is, the marking beam path may be within a two dimensional field of view of the marking head. The marking beam path may be substantially perpendicular to a plane of the target. The different beam path may be outside of the two dimensional field of view of the marking head. That is, in order to access the different beam path, the radiation beam may be directed outside of a normal working range of beam paths of the marking head. The radiation beam may be subject to the same focussing optical elements before exiting the marking head on either the marking beam path or the different beam path.

The positional relationship between the marking beam path and the different beam path may be a function of distance between the marking head and the target. A plane of the target may be substantially perpendicular to the marking beam path.

The process of adjusting the distance between the marking head and the target to satisfy the pre-determined condition may be described as a form of triangulation.

For example, a user may manually position the marking head at a pre-determined distance of about 150 mm from the target with an accuracy of a few hundred microns using an electromagnetic radiation system according to the invention.

Prior art systems use a physical object such as a ruler which must be inserted between the marking head and the product to be marked when a user wishes to manually adjust the distance between the product and the marking head to achieve the correct focal position. This is a slow, laborious and inaccurate method. Another prior art system uses two diodes either side of the marking head. Each diode emits a radiation beam and the point at which the radiation beams cross defines the correct distance between the marking head and the product for the marking laser to be in focus. This is a complicated and expensive system. The two diodes increase the size and weight of the marking head, thereby reducing the flexibility of use of the marking head in production lines that regularly include restricted spaces. In addition, use of the prior art system requires an initial calibration of three different beam paths (i.e. the normal marking beam path and the two calibration beam paths), which may involve a complicated and time-consuming process. The marking head of the present invention advantageously avoids the need for a physical object and thereby improving an ease, speed and accuracy with which an acceptable marking configuration can be found by a user. The marking head of the present invention advantageously uses the marking beam path to determine the correct marking configuration. This avoids the need for two different diodes and consequently reduces the size and weight of the marking head thereby increasing the flexibility of use of the marking head in production lines that include restricted spaces. Furthermore, this avoids the need to initially calibrate three different beam paths because only two beam paths are used, thereby increasing a simplicity of the marking head compared to prior art marking heads.

The positional relationship may be such that a change in distance between the electromagnetic radiation system and the target causes a corresponding change in a separation between the marking beam path and the different beam path in a plane of the target.

The positional relationship may be such that a predetermined change in the distance between the electromagnetic radiation system and the target causes a first predetermined change in a separation between the marking beam path and the different beam path in a plane of the target and a second change in the cross-sectional area of the radiation beam in the plane of the target, said first predetermined change being greater than said second change.

The detectability of the first pre-determined change is greater than the detectability of the second change. This advantageously increases the detectability of an acceptable marking configuration of the marking head with respect to the target. That is, whereas changes in the distance of the target from the marking head may result in an imperceptible (at least to the naked eye) change in the cross-sectional area of the radiation beam at the target, by providing the different beam which follows the different beam path, it is possible to provide a characteristic that varies far more significantly, so as to be clearly perceptible by a user, thereby allowing simple marking head setup and configuration.

The pre-determined condition may comprise the marking beam path and the different beam path being separated from one another in a plane of the target by a distance that is within an acceptable range of values. The acceptable range of values may be, for example, about 1 mm to about 10 mm. The acceptable range of values may be, for example, about 1 mm or less.

The pre-determined condition may comprise the marking beam path and the different beam path substantially coinciding with each other in a plane of the target.

The radiation beam may form a first image on the target along the marking beam path and a second image on the target along the different beam path. The wording "substantially coinciding" is intended to mean that a position associated with the first and second images coincide, e.g. a centre of the first and second images. For example, the image formed along the marking beam path may surround the image formed along the different beam path, or as another example, the first and second images may define interlocking shapes, etc.

The marking beam path may vary to trace a marking beam pattern on the plane of the target.

The marking beam path may be a time varying beam path. The marking beam path may comprise a plurality of paths that describe a first pattern at the plane of the target. The different path may comprise a plurality of paths that describe a second at the plane of the target.

The marking beam pattern may be a ring.

The electromagnetic radiation system comprises a first moveable optical element. The electromagnetic radiation system may comprise a second moveable optical element. The first moveable optical element comprises a first configuration that causes the radiation beam to follow the marking beam path and a second configuration that causes the radiation beam to follow the different beam path. The second optical element may comprise a first configuration that causes the radiation beam to follow the marking beam path and a second configuration that causes the radiation beam to follow the different beam path.

The first configuration and/or the second configuration may be a position or plurality of positions of the first optical element, e.g. a rotational position or plurality of rotational positions of the first moveable optical element and/or the second moveable optical element.

The first moveable optical element is driven by an actuator configured to drive the first optical element between the first and second configurations. The second moveable optical element may be driven by the actuator between the first and second configurations. The switching frequency between the first and second configurations may be at a frequency of about 20 Hz or more. It will be understood that any switching between positons within the first and/or second configurations may be a greater frequency than 20 Hz.

The moveable first optical element and/or the second moveable optical element may form part of an electromagnetic steering mechanism of the electromagnetic radiation system.

The electromagnetic radiation system may comprise a third optical element located outside of the marking beam path and inside the different beam path.

The third optical element may be fixed.

The radiation beam may comprise a visible wavelength. The visible wavelength may correspond to green light. That is, the radiation beam may comprise green light. The green light may have a wavelength of about 450 nm or more. The green light may have a wavelength of about 600 nm or less. The green light may have a wavelength of about 550 nm. A human eye has a greater spectral sensitivity to green light than other colours of visible light. That is, the human eye may detect green light as being brighter (and therefore more visible) than an equivalent power of another colour of visible light. As such, green light reflecting from a surface is more visible across a larger range of materials and/or ambient light conditions than equivalent powers of different colours of light (e.g. red light, blue light, etc.). Thus, using green light advantageously makes the positional relationship between the marking beam path and the different beam path at the target easier to see on the target across a wider range of target materials (e.g. less reflective targets and/or darker targets) and ambient lighting conditions (e.g. brighter ambient lighting conditions). This in turn may advantageously improve an accuracy with which a correct configuration (e.g. positioning the system at a correct focal length) of the electromagnetic radiation system may be found.

The radiation beam may have an intensity that is safe for human eyes.

A source of the radiation beam may be optically coupled to a first end of an optical fibre and the electromagnetic radiation system may be optically coupled to a second end of the optical fibre. This advantageously reduces a size of marking head. The optical fibre may comprise an inner core having a first refractive index and an outer cladding having a different refractive index. The radiation beam may be guided through both the inner core and the outer cladding.

The electromagnetic radiation system may comprise a camera configured to monitor the positional relationship between the marking beam path and the different beam path. For example, if displayed on a monitor then the camera feed would help the user to visualize the patterns in tight or inconvenient integration situations/production lines incorporating the electromagnetic radiation system.

A system (see claim 10) comprises the electromagnetic radiation system and an electromagnetic radiation system position adjuster configured to receive information relating to the positional relationship between the marking beam path and the different beam path from the camera and use the information to adjust a position of the electromagnetic radiation system until the pre-determined condition is satisfied. This advantageously provides automatic movement of marking head to reach the pre-determined distance from target, making the electromagnetic radiation system safer and simpler for a user. The electromagnetic radiation system position adjuster may comprise a memory that may be configured to store data relating to marking head position and/or the target position.

According to a second aspect of the invention, there is provided a method of calibrating the electromagnetic radiation system according to claim 11, comprising determining the pre-determined distance; determining the positional relationship between the marking beam path and the different beam path at the pre-determined distance; determining configuration data in dependence on the positional relationship; and, storing the configuration data in memory. This advantageously accounts for deviations between different electromagnetic radiation systems such as manufacturing deviations resulting from tolerances e.g. optical element positions/orientations. Re-calibration can be used to account for suspected wear and tear etc.

The electromagnetic radiation system may comprise a second moveable optical element. The second moveable optical element may comprise a first configuration that causes the radiation beam to follow the marking beam path and a second configuration that causes the radiation beam to follow the different beam path. The configuration data may comprise the first and second configurations of the first optical element and/or the second optical element that cause the pre-determined condition to be satisfied.

Determining the pre-determined distance may comprise measuring a focal length of the electromagnetic radiation system.

Determining the positional relationship between the marking beam path and the different beam path at the pre-determined distance may comprise adjusting the first and/or second configuration of the first moveable optical element and/or the second moveable optical element until the marking beam path and the different beam path substantially coincide with each other at the pre-determined distance.

According to a third aspect of the invention, there is provided a method of positioning an electromagnetic radiation system a pre-determined distance away from a target according to claim 14, comprising arranging the electromagnetic radiation system in a first arrangement in which the radiation beam is directed along a marking beam path that is within a marking range of the electromagnetic radiation system; arranging the electromagnetic radiation system in a second arrangement in which the radiation beam is directed along a different beam path that is not within the marking range of the electromagnetic radiation system; monitoring a positional relationship between the marking beam path and the different beam path whilst adjusting a distance between the electromagnetic radiation system and the target; and, stopping adjustment of the distance between the electromagnetic radiation system and the target when the positional relationship satisfies a pre-determined condition.

Also described but not claimed, there is provided an electromagnetic radiation system comprising an electromagnetic radiation steering mechanism configured to steer electromagnetic radiation to address a specific location within a two-dimensional field of view comprising a first optical element having an associated first actuator configured to rotate the first optical element about a first rotational axis to change a first coordinate of a first steering axis in the two-dimensional field of view; and a second optical element having an associated second actuator configured to rotate the second optical element about a second rotational axis to change a second coordinate of a second steering axis in the two-dimensional field of view. The second optical element is configured to receive the radiation beam after the radiation beam has interacted with the first optical element. A size of the two dimensional field of view along the first steering axis is smaller than a size of the two dimensional field of view along the second steering axis.

The electromagnetic steering mechanism may be for directing electromagnetic radiation at a target such as a product on a production line.

The described but not claimed electromagnetic radiation system may be a scanner (e.g. for inspecting the target).

The first optical element is associated with a smaller dimension of the marking field than the second optical element. This advantageously increases a scanning speed of the marking head and reduces a size, weight and cost of the marking head.

The first optical element and the second optical element may each be configured to rotate about respective optical axes. The optical axes may be parallel to each other, and to the longitudinal axis of the marking head.

Each of the first and second optical elements may be referred to as a deflector or a variable deflector. That is, the first and second optical elements may be configured to deflect incident electromagnetic radiation in a variable manner such that, when the first and/or second optical element is rotated, the electromagnetic radiation exiting the electromagnetic radiation steering mechanism is steered about the two-dimensional field of view. Rotation of the first or second optical elements may vary a deflection of the electromagnetic radiation that is caused by the first and/or second optical elements.

Each of the first and second steering axes may be referred to as a deflection axis or a deflection degree of freedom. This is because each optical element may be configured to deflect the electromagnetic radiation and thereby change a propagation direction and/or orientation of the electromagnetic radiation. The two deflection degrees of freedom associated with the first and second optical elements may combine to address specific locations within the two dimensional field of view about which the electromagnetic radiation may be steered.

The two dimensional field of view may correspond to an imaginary plane at a fixed distance from the electromagnetic radiation steering mechanism onto which the electromagnetic radiation is projected. For example, the two dimensional field of view may be substantially coplanar with a portion of a surface of a product that is to be marked using the electromagnetic radiation.

A size of the two dimensional field of view may at least partially depend upon a distance between an output aperture of the electromagnetic radiation steering mechanism and a surface upon which the electromagnetic radiation is steered. For example, a distance between the output of the marking head and the product to be marked may be about 10 mm or more. For example, a distance between the output of the marking head and the product to be marked may be about 1000 mm or less. The two dimensional field of view may, for example, have dimensions of about 10 mm by about 20 mm or more. The two dimensional field of view may, for example, have dimensions of about 1000 mm by about 2000 mm or less.

Each of the first and second actuators may be referred to as a drive mechanism. That is, the first actuator is configured to drive a rotation of the first optical element about the first rotational axis and the second actuator is configured to drive a rotation of the second optical element about the second rotational axis

The first and second rotational axes may be substantially parallel. The first and second rotational axes may be non-parallel, e.g. substantially perpendicular.

For a given point in the two dimensional field of view, rotating the first optical element will cause a position of the electromagnetic radiation to change along the first steering axis and rotating the second optical element will cause a position of the electromagnetic radiation to change along the second steering axis. There may be a degree of linear independence between the first steering axis and the second steering axis. For example, the second angle may be less than 90° (e.g. about 80°) and the electromagnetic radiation steering mechanism may still effectively address multiple locations within the two dimensional field of view about which the electromagnetic radiation may be steered. The first steering axis and/or the second steering axis may not be linear. For example, the first steering axis and/or the second steering axis may be curvilinear.

Each steering axes may be described using any desired coordinate system e.g. a Cartesian coordinate system, a spherical polar coordinate system, a cylindrical polar coordinate system, etc. For example, when describing the steering axes using Cartesian coordinates, an "x" coordinate may be considered to be the first coordinate of the first steering axis and a "y" coordinate may be considered to be the second coordinate of the second steering axis. Alternatively, when describing the first and second steering axes using spherical polar coordinates, a radial coordinate may be considered to be the first coordinate of the first steering axis and an azimuthal coordinate may be considered to be the second coordinate of the second steering axis.

Rotation of the first and second optical elements may provide one to one mapping of the associated change in the first and second steering coordinates. Rotating one of the optical elements may exclusively steer the electromagnetic radiation in the associated steering axis.

The second reflective surface may be larger than the first reflective surface. This may ensure that the electromagnetic radiation reflected by the first reflective surface is received by the second reflective surface across a range of rotations of the first reflective surface. That is, the second reflective surface may be large enough to receive the electromagnetic radiation after a maximum rotation of the first reflective surface in either direction about the first rotational axis. A steering distance by which the electromagnetic radiation is steered between the first reflective surface and the second reflective surface may be at least partially determined by a distance between the first reflective surface and the second reflective surface. That is, the greater the separation between the first reflective surface and the second reflective surface, the larger the second reflective surface may be in order to still receive the steered electromagnetic radiation. It may therefore be advantageous to reduce a distance between the first reflective surface and the second reflective surface to reduce and/or limit a steering distance of the electromagnetic radiation within the electromagnetic radiation steering mechanism between the first reflective surface and the second reflective surface.

At least one of the first actuator and second actuator may comprise a galvanometer motor. Alternatively, at least one of the first actuator and the second actuator may comprise a piezoelectric drive, a magnetic drive, a direct current drive, a stepper motor, a servomotor, etc.

A displacement of the electromagnetic radiation within the two dimensional field of view that is caused by rotation of the first optical element or the second optical element may be determined using trigonometry with knowledge of the angle by which the first optical element or the second optical element was rotated and knowledge of the focal distance between the electromagnetic radiation steering mechanism and the two dimensional field of view. Each actuator may, for example, be configured to rotate each optical element by about ± 20°.

The electromagnetic radiation may be a laser beam. The electromagnetic radiation may, for example, be generated by a CO2 laser. The electromagnetic radiation may comprise infrared radiation, near-infra-red radiation, ultraviolet radiation, visible radiation, etc. The electromagnetic radiation may have a power of about 5 W or more. The electromagnetic radiation may have a power of about 10 W or more. The electromagnetic radiation may have a power of about 100 W or less. The electromagnetic radiation may have a power of about 100 kW or less.

The electromagnetic radiation may have a beam width of more than about 0.01 mm. The electromagnetic radiation may have a beam width of less than about 10 mm. For example, the electromagnetic radiation may have a beam width of about 5 mm.

The optical path length between the first optical element and the second optical element may be about 25 mm or more. The optical path length between the first optical element and the second optical element may be about 60 mm or less. The optical path length between the first optical element and the second optical element may be about 33 mm.

An optical path from the first optical element to the second optical element may pass via at least two fixed optical elements.

According to a fourth aspect of the invention, there is provided a method of marking a product according to claim 15, comprising using the electromagnetic radiation system of any of claims 1 to 10.

Also described but not claimed, there is provided a galvanometer for moving an optical element, the galvanometer comprising an output shaft extending from a first end of the galvanometer; a body housing an actuating coil, the actuating coil being configured to cause the output shaft to rotate about a rotation axis in dependence upon a control signal; a position detector configured to output a position signal indicative of an angular position of the output shaft; and an electrical interface configured to receive the control signal from a controller, and to provide the position signal to the controller. The body and the position detector are both substantially cylindrical and are disposed substantially concentrically with the rotation axis, the body is disposed between the first end and the position detector. The electrical interface is disposed at a second end of the galvanometer, opposite to the first end along the rotation axis.

The electrical interface may comprise a connector. The connector may comprise a cable.

The electrical interface may comprise one or more wires. The wires may exit the second end of the galvanometer.

The connector may be supported by a circuit board.

The circuit board may be a printed circuit board. The circuit board may be disposed on a surface of the position detector at the second end of the galvanometer. The circuit board may extend in a direction perpendicular to the axis of rotation no further than the extent of the body and/or the position detector.

The electrical connector may be connected to the coil by a first wire. The electrical connector may be connected to the position detector by a second wire. The first and/or second wire may run along an outside surface of the position detector from the connector to a junction between the body and the position detector.

The electrical connector and/or the circuit board may be substantially co-axial with the body and/or the position detector.

The electrical interface may extend in a direction perpendicular from the axis of rotation no further than the extent of the body and/or the position detector.

Also described but not claimed, there is provided an electromagnetic radiation directing head for directing an electromagnetic radiation beam at a target comprising a moveable optical element configured to steer the radiation beam within a marking field and a galvanometer configured to move the optical element, wherein the galvanometer may be the galvanometer discussed above.

The electromagnetic radiation directing head may comprise a second moveable optical element configured to steer the radiation beam within a marking field; and a second galvanometer configured to move the second optical element. The galvanometer may be the galvanometer discussed above.

The electromagnetic radiation system may comprise a laser marking head.

The first and/or second galvanometer may be configured to cause the corresponding optical element to rotate about a respective rotational axis. The or each rotational axis may be substantially parallel with a longitudinal axis of the electromagnetic radiation directing head.

Also described but not claimed, there is also provided an electromagnetic radiation directing head for directing an electromagnetic radiation beam at a target comprising a moveable optical element configured to steer the radiation beam within a marking field and an actuator configured to move the optical element, the actuator comprising an output shaft extending from a first end of the actuator; a body housing an actuating coil, the actuating coil being configured to cause the output shaft to rotate about a rotation axis in dependence upon a control signal; a position detector configured to output a position signal indicative of an angular position of the output shaft; and an electrical interface configured to receive the control signal from a controller, and to provide the position signal to the controller. The body is substantially cylindrical and disposed substantially concentrically with the rotation axis and the electrical interface is disposed at a second end of the galvanometer, opposite to the first end along the rotation axis.

The position detector may be disposed within the body.

The position detector may be substantially cylindrical. The position detector may be disposed substantially concentrically with the rotation axis.

The actuator may comprise a motor, such as, for example a brushless DC motor. The electromagnetic radiation directing head may comprise a second actuator.

It will, of course, be appreciated that features described in the context of one aspect of the invention may be combined with features described in the context of another aspect of the invention. For example, features described in the context of the assembly of the first aspect of the invention, or and of the second to ninth aspects of the invention may be combined with each other, and also with features of above described further aspects of the invention, and vice versa.

### BRIEF DESCRIPTION OF THE DRAWINGS

The accompanying drawings are not intended to be drawn to scale. In the drawings, each identical or nearly identical component that is illustrated in various figures is represented by a like numeral. For purposes of clarity, not every component may be labelled in every drawing. Embodiments of the invention will now be described, by way of example only, with reference to the accompanying schematic drawings, in which:
FIG. 1 schematically depicts a marking head for projecting a radiation beam onto a target;
FIG. 2 schematically depicts a marking head comprising a second optical element located outside of a marking beam path and inside a different beam path;
FIG. 3 schematically depicts multiple stages of adjusting a distance between a marking head and a target to satisfy a pre-determined condition;
FIG. 4 shows a flowchart of a method of calibrating a marking head;
FIG. 5 schematically depicts a marking head comprising a cylindrical housing;
FIG. 6 schematically depicts an internal view of the marking head of FIG. 5;
FIG. 7 schematically depicts a side view of the marking head of FIG. 6;
FIG. 8, consisting of FIG. 8A and FIG. 8B, schematically depicts a marking beam path through a portion of a marking head including a third optical element;
FIG. 9, which consists of FIG. 9A and FIG. 9B, schematically depicts a different beam path through the marking head of FIG. 8;
FIG. 10 schematically depicts a radiation beam exiting the marking head of FIG. 9 and being incident upon three different two dimensional fields of view;
FIG. 11 shows a flowchart of a method of positioning a marking head of a laser marking system a pre-determined distance away from a target;
FIG. 12, consisting of FIGS 12A-D, schematically depicts a radiation beam deflecting from a first moveable optical element and being incident on a second moveable optical element;
FIG. 13 schematically depicts the effect of reducing the angular freedom of the first optical element on a two dimensional field of view of the marking head;
FIG. 14 schematically depicts a known galvanometer motor;
FIGS. 15A and 15B are perspective views of a galvanometer motor for use in the marking head shown in FIG. 5; and
FIGS. 15C and 15D are bottom and side views of a galvanometer motor for use in the marking head shown in FIG. 5.

### DETAILED DESCRIPTION

Aspects and embodiments disclosed herein are not limited to the details of construction and the arrangement of components set forth in the following description or illustrated in the drawings. Aspects and embodiments disclosed herein are capable of being practiced or of being carried out in various ways.

Aspects and embodiments disclosed herein include a marking head for projecting a radiation beam of a laser scanning or marking system and a laser scanning or marking system including such a system. Laser marking systems may be utilized in production lines for marking various types of articles. Laser marking systems may be utilized to imprint bar codes, unique identifying marks, expiration dates, or other information on items passing through a production line. In some implementations, carbon dioxide (CO2) gas lasers may be used in laser marking systems. Carbon dioxide lasers may produce beams of infrared radiation in four principal wavelength bands centering on 9.3, 9.6, 10.2, and 10.6 micrometers (µm). Lasers utilized in laser marking systems are typically operated at laser power levels in the tens of watts.

Laser scanning or marking systems are not, however limited to using CO₂ lasers. In some implementations, fiber lasers or diode lasers may be used in laser marking systems. In some aspects and embodiments, optical scanners or markers may utilize lasers that operate in the ultraviolet, visible, or near infrared wavelengths or any other type of laser or optical illumination source. The use of visible radiation beams in laser scanner systems may be advantageous in that a user can see the laser beam where it illuminates an object being scanned so the user can adjust the position of the laser scanner or object being scanned so that the laser illuminates a desired portion of the object.

Embodiments of laser scanners disclosed herein may include at least two mirror turning devices such as piezoelectric or magnet drives, direct current drives, stepper motors, servomotors, or galvanometers having mirrors attached. Subsequently the term "drive mechanism" will be used as a blanket term for the different mirror turning devices. The mirrors used in embodiments of the laser scanner/marker disclosed herein may be silver coated or gold coated mirrors or any other suitably coated material. Windows and lenses used in embodiments of the laser scanner/marker disclosed herein may be, for example, germanium, zinc selenide, quartz, BK7 borosilicate glass, or any other suitable material.

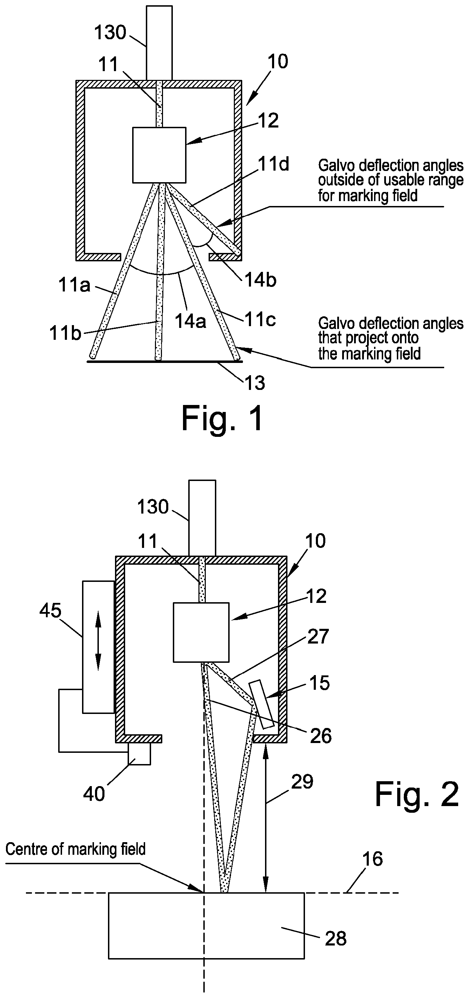

FIG. 1 schematically depicts a marking head 10 for projecting a radiation beam 11 onto a target. The marking head 10 comprises an electromagnetic radiation steering mechanism 12 configured to steer the radiation beam 11 to address a specific location within a two-dimensional field of view 13. The electromagnetic steering mechanism 12 may comprise, for example, a first moveable optical element (not shown) configured to change a first coordinate of a first steering axis in the two-dimensional field of view 13. The electromagnetic steering mechanism 12 is configured to steer the radiation beam 11 across a marking range of angles 14a to address specific locations within the two dimensional field of view 13. Any beam path within the continuous range of beam paths 11a-c of radiation that are possible within the marking range of angles 14a may be described as a marking beam path. The electromagnetic steering mechanism 12 may be configured to steer the radiation beam 11 across an additional range of angles 14b that do not address specific locations within the two dimensional field of view 13 without the aid of a third optical element (not shown). That is, in a process that may be referred to as beam clipping, when travelling within the additional range of angles 14b the radiation beam 11 may not be fully incident on optical components of the marking head 10 and/or be shadowed by other components of the marking head 10. Any beam path of radiation 11d that is possible within the additional range of angles 14b may be described as a different beam path. In the example of FIG.1 a source (not shown) of the radiation beam 11 is optically coupled to a first end not shown) of an optical fibre housed in an umbilical 130 and the marking head 10 is optically coupled to a second end of the optical fibre. The optical fibre may comprise an inner core having a first refractive index and an outer cladding having a different refractive index. The radiation beam may be guided through one or both of the inner core and the outer cladding of the optical fibre.

FIG. 2 schematically depicts a marking head 10 comprising a third optical element 15 located outside of the marking beam path 26 and inside the different beam path 27. In the example of FIG. 2, the marking beam path 26 is different to the marking beam paths 11a-c shown in FIG. 1. However, the marking beam path 26 may be substantially the same as any of the marking beam paths 11a-c shown in FIG. 1. The marking head 10 has a first arrangement in which the radiation beam 11 exits the marking head 10 along the marking beam path 26 and a second arrangement in which the radiation beam 11 exits the marking head 10 along the different beam path 27. The first arrangement may be realised when the first optical element (not shown) of the electromagnetic steering mechanism 12 is in a first position. The second arrangement may be realised when the first optical element is in a second position. The first optical element may be driven by an actuator configured to drive the first optical element between the first and second positions at a frequency of about 20Hz or more. The first optical element may form part of the electromagnetic steering mechanism 12.

The third optical element 15 is located outside of the marking beam path 26 and inside the different beam path 27. The third optical element 15 is located in a position such that the third optical element 15 does not shadow any portion of the usable two dimensional field of view of the marking head 10 (i.e. within the marking range of angles 14a), but still positioned in a way that it is reachable by additional range of angles 14b. In the example of FIG.2 the third optical element 15 is fixed. The third optical element 15 directs the radiation beam 11 along a different beam path 27 that converges with the marking beam path 26. The third optical element 15 may be sized so as to be as small as possible while still being large enough that the third optical element 15 can capture a majority of the cross-sectional area of the radiation beam 11. In this way, the third optical element 15 will not needlessly occupy further space within the marking head 10.

A positional relationship exists between the marking beam path 26 and the different beam path 27. The positional relationship satisfies a pre-determined condition when the marking head 10 is at a pre-determined distance 29 from the target 28. The positional relationship between the marking beam path 26 and the different beam path 27 is a function of distance between the marking head 10 and the target 28. In the example of FIG. 2 the marking beam path 26 is not perpendicular to a plane 16 of the target 28. In alternative arrangements the marking beam path 26 may be substantially perpendicular to the plane 16 of the target 28.

The positional relationship is such that a change in distance between the marking head 10 and the target 28 causes a corresponding change in a separation between the marking beam path 26 and the different beam path 27 in the plane 16 of the target 28. In the example of FIG. 2 the pre-determined condition comprises the marking beam path 26 and the different beam path 27 substantially coinciding with each other in the plane 16 of the target 28. In alternative arrangements the pre-determined condition may comprise the marking beam path 26 and the different beam path 27 being separated from one another in a plane 16 of the target 28 by a distance that is within an acceptable range of values. The acceptable range of values may be, for example, about 1 mm to about 10 mm. The acceptable range of values may be, for example, about 1 mm or less. The acceptable range may at least partially depend on a focal length of the marking head 10.

The positional relationship is such that a predetermined change in the distance between the marking head 10 and the target 28 causes a first predetermined change in a separation between the marking beam path 26 and the different beam path 27 in the plane 16 of the target 28 and a second change in the cross-sectional area (not shown) of the radiation beam 11 in the plane 16 of the target 28. The first predetermined change is greater than the second change. Thus, the detectability of the first pre-determined change is greater than the detectability of the second change. This advantageously increases the detectability of an acceptable marking configuration of the marking head 10 with respect to the target 28. That is, whereas changes in the distance of the target 28 from the marking head 10 may result in an imperceptible (at least to the naked eye) change in the cross-sectional area of the radiation beam 11 at the target 28, by providing the different beam path 27 it is possible to provide a characteristic that varies far more significantly, so as to be clearly perceptible by a user, thereby allowing simple marking head setup and configuration.

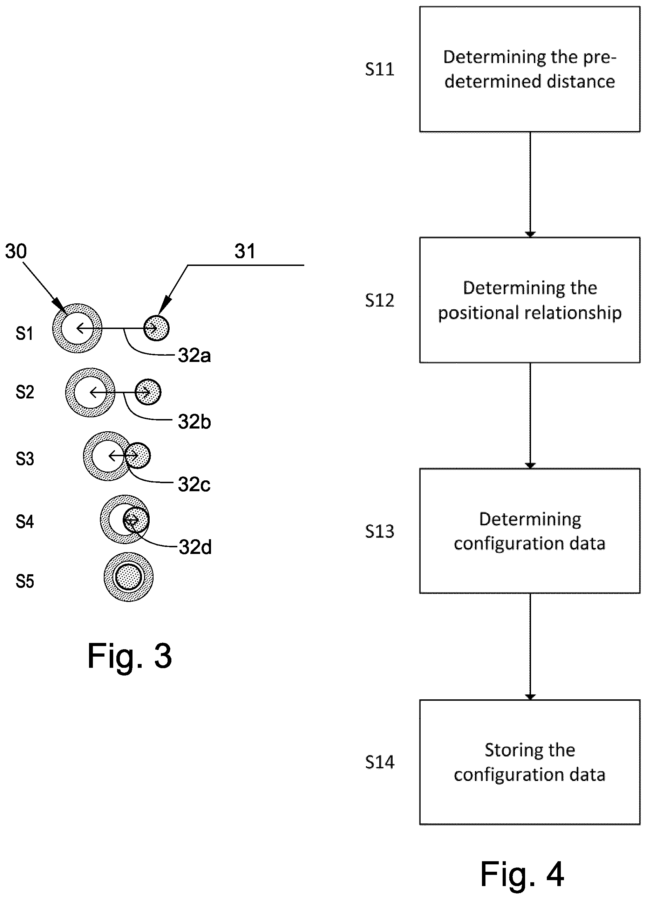

FIG. 3 schematically depicts multiple stages S1-S5 of adjusting a distance between the marking head (not shown) and the target (not shown) to satisfy the pre-determined condition. The radiation beam comprises a visible wavelength. The visible wavelength may correspond to green light. That is, the radiation beam may comprise green light. The green light may have a wavelength of between about 450 nm and about 600 nm (e.g. about 550 nm). Using green light advantageously makes the positional relationship between the marking beam path and the different beam path at the target easier to see on the target across a wider range of target materials (e.g. less reflective targets and/or darker targets) and ambient lighting conditions (e.g. brighter ambient lighting conditions). This is because the human eye has a greater sensitivity to green light than other colours of visible light. FIG. 3 shows views of what a user would see at different stages when looking at the plane of the target whilst the radiation beam is switched between the marking beam path and the different beam path. The marking beam path forms a first image 30 on the target. The different beam path forms a second image 31 on the target. In the example of FIG.3 the marking beam path varies to trace a marking beam pattern as the first image 30 on the target. In the example of FIG.3 the marking beam pattern 30 is a ring. The different beam path merely forms a dot 31 on the target of the plane.

The positional relationship between the marking beam path and the different beam path is such that a change in distance between the marking head and the target causes a corresponding change in a separation between the marking beam path and the different beam path in a plane of the target. In the example of FIG.3 the pre-determined condition is satisfied when the first image 30 substantially coincides with the second image 31 in the plane of the target. In other embodiments the pre-determined condition may comprise the marking beam path and the different beam path being separated from one another in a plane of the target by a distance that is within an acceptable range of values. The acceptable range of values may be, for example, about 1 mm to about 10 mm. The acceptable range of values may be, for example, about 1 mm or less. The acceptable range may at least partially depend on a focal length of the marking head 10. In the first stage S1 the marking head and the target are not positioned at the pre-determined distance from one another. Thus, the first image 30 and the second image 31 do not substantially coincide and are separated by a first distance 32a. In the second stage S2 the marking head and/or the target has been moved such that the distance between them is closer to the pre-determined distance than it was in the first stage S1. Thus, the first image 30 and the second image 31 do not substantially coincide and are separated by a second distance 32b that is smaller than the first distance 32a. In the third stage S3 the marking head and/or the target has been moved such that the distance between them is closer to the pre-determined distance than it was in the first stage S1 and the second stage S2. Thus, the first image 30 and the second image 31 do not substantially coincide and are separated by a third distance 32c that is smaller than the first distance 32a and the second distance 32b. In the fourth stage S4 the marking head and/or the target has been moved such that the distance between them is closer to the pre-determined distance than it was in the first stage S1 and the second stage S3 and the third stage S3. Thus, the first image 30 and the second image 31 do not substantially coincide and are separated by a fourth distance 32d that is smaller than the first distance 32a, the second distance 32b and the third distance 32c. In the fifth stage S5 the marking head and/or the target has been moved such that the distance between them is substantially equal to the pre-determined distance (in this case substantially zero). Thus, the first image 30 and the second image 31 substantially coincide.

The marking head may comprise two modes of operation, namely a calibration mode and a marking mode. The calibration mode may comprise the marking head emitting a calibration radiation beam such as the radiation beam of FIG. 2 whilst a user adjusts a distance between the marking head and the target until the pre-determined condition is satisfied. The marking mode may comprise the marking head projecting a marking radiation beam along a marking beam path to form a mark on the target after the pre-determined condition has been satisfied. The calibration radiation beam may be different to the marking radiation beam. For example, the marking radiation beam may have a greater intensity than the calibration radiation beam. The marking radiation beam may have a different wavelength than the calibration radiation beam. For example, the marking radiation beam may comprise infrared radiation, whereas the calibration radiation beam may comprise radiation having a wavelength within the visible spectrum. The calibration radiation beam may comprise green light. The green light may have a wavelength of between about 450 nm and about 600 nm (e.g. about 550 nm). Using green light advantageously makes the position of the calibration radiation beam easier to see on the target across a wider range of target materials (e.g. less reflective targets and/or darker targets) and ambient lighting conditions (e.g. brighter ambient lighting conditions).

The pre-determined distance between the marking head and the target may correspond to an acceptable marking configuration of the marking head with respect to the target. For example, when the marking head is at the pre-determined distance from the target, a cross-sectional area of a marking radiation beam at the target (i.e. when the marking head is in marking mode rather than calibration mode) may be within an acceptable range of values and/or an intensity (i.e. power transferred per unit area) of the marking radiation beam at the target may be within an acceptable range of values and/or the pre-determined distance may correspond to a focal length of the marking head. The acceptable marking configuration may be selected in at least partial dependence on a mark that is to be formed using the radiation beam, a material of a product that is to be marked using the radiation beam, a speed of the product on a production line, a power of a radiation source generating the laser beam, a wavelength of the radiation beam, etc.

Referring again to FIG. 2, the marking head 10 may further comprise a camera 40 configured to monitor the positional relationship between the marking beam path 26 and the different beam path 27. For example, if an image (such as those shown in FIG. 3) captured by the camera 40 is displayed on a monitor (not shown) that is viewed by a user of the marking head 10 then the camera 40 would help the user to visualize the image formed by the marking beam path 26 and the image formed by the different beam path 27 on the target 28 in restricted and/or inaccessible installation environments such as busy production lines incorporating the marking head. The camera 40 may assist in manual adjustment of the distance between the marking head 10 and the target 28. Alternatively or additionally a system may comprise the marking head 10 having the camera 40 and a marking head position adjuster 45 configured to receive information relating to the positional relationship between the marking beam path 26 and the different beam path 27 from the camera 40 and use the information to adjust a position of the marking head 10 until the pre-determined condition is satisfied. This system allows automatic adjustment of the distance between the marking head 10 and the target 28 until the pre-determined condition is satisfied and the marking head 10 is the pre-determined distance away from the target 28.

FIG. 4 shows a flowchart of a method of calibrating the marking head of FIG. 2. A first step S11 includes determining the pre-determined distance. For example, if the pre-determined distance corresponds to a focal length of the marking head, the first step may be performed using an optical focal length measurement device. A second step S12 includes determining the positional relationship between the marking beam path and the different beam path at the pre-determined distance. A third step S13 includes determining configuration data in dependence on the positional relationship. A fourth step S14 includes storing the configuration data in memory.

The marking head may comprise a first moveable optical element and/or a second moveable optical element, the first moveable optical element and/or the second moveable optical element may comprise a first configuration that causes the radiation beam to follow the marking beam path and a second configuration that causes the radiation beam to follow the different beam path. In such an embodiment, the configuration data may comprise the first and second configurations of the first optical element and/or the second optical element that cause the pre-determined condition to be satisfied. Determining the positional relationship between the marking beam path and the different beam path at the pre-determined distance may comprise adjusting the first and/or second configuration of the first moveable optical element and/or the second moveable optical element until the marking beam path and the different beam path substantially coincide with each other at the pre-determined distance.

The different beam path may be precisely repeatable because the actuators (e.g. galvanometers) driving the electromagnetic steering mechanism may be programmed to steer the radiation beam onto the second optical element with high precision.

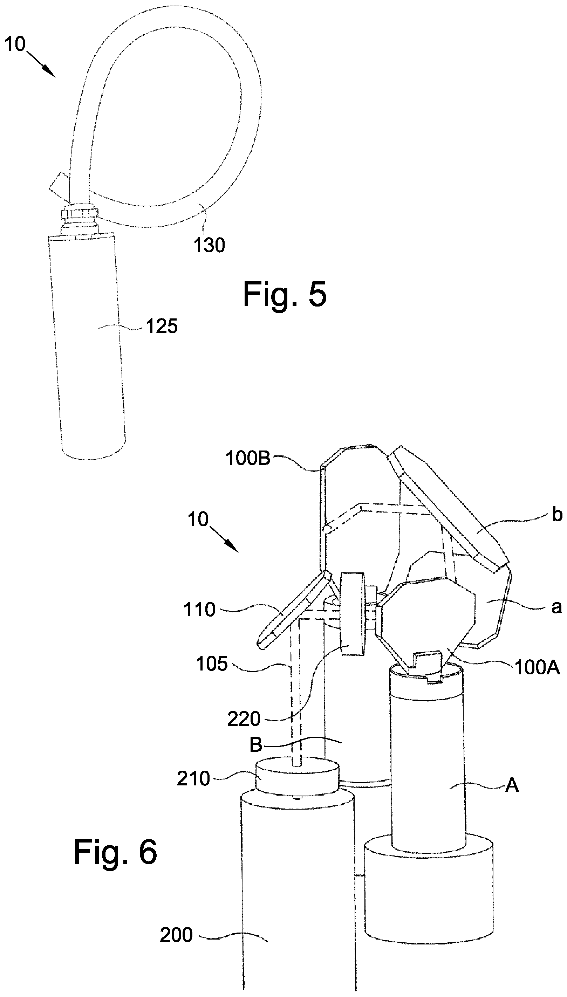

FIG. 5 schematically depicts a marking head 10 comprising a cylindrical housing 125. The cylindrical housing 125 may have a diameter of about 40 mm and a length of about 350 mm. The cylindrical housing 125 may have substantially similar dimensions as the marking head of a model 1860 continuous inkjet printer available from Videojet Technologies Inc., Wood Dale, IL. A flexible umbilical cord 130 may be coupled to the housing 125 and may include power and signal lines to provide power to and control drive mechanisms (not shown). The umbilical cord 130 may also include a light waveguide, for example, a fibre optic cable to carry a laser beam from an external laser beam generator into the housing 125. Alternatively, a laser beam generator may be disposed within the housing 125 with the other components. The cylindrical housing 125 and enclosed components may form a marking head or a scanning head for a laser marking system or an optical scanning system. A lower end of the housing 125 may be sealed by an optically transparent window to keep debris from entering the housing 125. The flexible umbilical 125 may advantageously allow easy movement of the marking head 125 thereby further increasing the range of applications and installation environments in which the marking head 125 may be used.

A laser marking head 10 as disclosed herein may weigh about 0.5 kg, about one tenth the weight of many existing systems. The form factor, size, and weight of aspects and embodiments of the laser scanner/marker system disclosed herein provide for the disclosed laser scanner/marker system to be more easily manipulated. The ability to move the marking head 10 of the laser scanner/marker system relative to objects being marked may eliminate the need for a stage of a system through which the objects pass to be moveable, thus reducing the mechanical complexity of the system as compared to some existing systems.

FIG. 6 schematically depicts an internal view of the marking head 10 of FIG. 5. The marking head 10 comprises an electromagnetic radiation steering mechanism comprising a first optical element 100A having an associated first actuator A configured to rotate the first optical element 100A about a first rotational axis to change a first coordinate of a first steering axis in a two-dimensional field of view. The electromagnetic radiation steering mechanism further comprises a second optical element 100B having an associated second actuator B configured to rotate the second optical element 100B about a second rotational axis to change a second coordinate of a second steering axis in the two-dimensional field of view. The first optical element 100A comprises a first reflective surface configured to receive and reflect electromagnetic radiation 105 and the second optical element 100B comprises a second reflective surface configured to receive and reflect the electromagnetic radiation 105. In the example of FIG. 6, the first rotational axis and the first reflective surface are substantially parallel, and the second rotational axis and the second reflective surface are substantially parallel.

The two actuators A, B may be placed as closely as possible to each other (a minimal distance between the two rotation axes of the drive mechanisms). The closer the two actuators A, B may be placed, the smaller the mirror 100B of the second drive mechanism B may be. The two actuators A, B may be displaced on their rotation axes relative to each other.

The electromagnetic radiation steering mechanism further comprises an electromagnetic radiation manipulator "a", "b" optically disposed between the first and second optical elements 100A, 100B. The first optical element 100A is configured to receive electromagnetic radiation 105 and direct the electromagnetic radiation 105 to the electromagnetic radiation manipulator "a", "b". The electromagnetic radiation manipulator "a", "b" is configured to direct the electromagnetic radiation 105 to the second optical element 100B. The second optical element 100B may be configured to direct the electromagnetic radiation 105 to an optical output of the electromagnetic radiation steering mechanism. In alternative arrangements, the first optical element 100A and its associated actuator A may be substantially perpendicular to the second optical element 100B and its associated actuator B, and the electromagnetic radiation manipulator a, b may not be present.

The electromagnetic radiation manipulator comprises a first mirror "a" and a second mirror "b". The first mirror "a" is configured to receive the electromagnetic radiation 105 after the electromagnetic radiation 105 has interacted with the first optical element 100A and direct the electromagnetic radiation 105 to the second mirror "b". The second mirror "b" is configured to receive the electromagnetic radiation 105 after the electromagnetic radiation 105 has interacted with the first mirror "a" and direct the electromagnetic radiation 105 to the second optical element 100B. The first mirror "a" and the second mirror "b" are fixed with respect to each other.

The first mirror "a" is arranged to apply about a 90° change in a propagation direction of the electromagnetic radiation 105. To achieve this, the first mirror "a" may be optically disposed at a 45° angle with respect to incident electromagnetic radiation 105. The second mirror "b" is arranged to apply about a 90° change in a propagation direction of the electromagnetic radiation 105. To achieve this, the second mirror "b" may be optically disposed at a 45° angle with respect to incident electromagnetic radiation 105. These changes in the propagation direction of the electromagnetic radiation 105 provide two orthogonal degrees of freedom for the beam deflection.

The electromagnetic radiation steering mechanism further comprises a third reflector 110. In known marking heads, and in the example of FIG. 5, the electromagnetic radiation 105 is turned by the third reflector 110 by 90° to hit the first optical element 100A of the first actuator A. It will be appreciated that at various positions within the electromagnetic radiation steering mechanism the electromagnetic radiation propagates in a direction that is not along an axis parallel to the first and second axes of rotation.

The marking head further comprises a collimator 200 and focusing optics 210, 220. The collimator 200 may be configured to receive electromagnetic radiation 105 from a radiation source or optical fibre (not shown) and provide a beam of electromagnetic radiation 105 having substantially parallel rays. The focussing optics 210, 220 may be configured to receive electromagnetic radiation 105 provided by the collimator 200 and condition the electromagnetic radiation 105 in a desired way, e.g. to ensure the electromagnetic radiation 105 fits on to the first and second optical elements 100A, 100B.

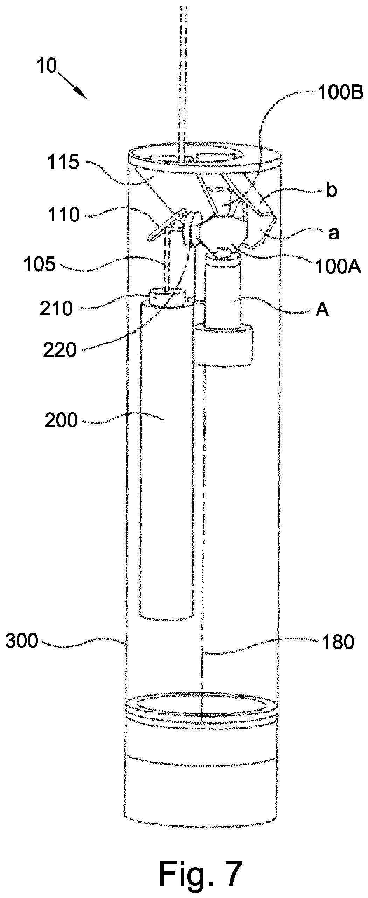

FIG. 7 shows a side view of the marking head 10 of FIG. 6. The electromagnetic radiation steering mechanism further comprises a fourth reflector 115. After the electromagnetic radiation 105 has reflected from the second optical element 100B, the electromagnetic radiation 105 is turned by the fourth reflector 115 by 90°. The electromagnetic radiation 105 may then exit the electromagnetic radiation steering mechanism and be incident upon an object such as a product that is to be marked by the electromagnetic radiation 105.

In the example of FIG. 6 and FIG. 7 the first rotational axis and the second rotational axes are substantially parallel and the electromagnetic radiation steering mechanism is installed substantially parallel to a length of the marking head of the laser marking system such that an axis 180 of the marking head that is parallel to the length (i.e. the greatest of three dimensions) of the marking head 10 is substantially parallel to the first and second axes of rotation of the first and second optical elements 100A, 100B.

For example, the electromagnetic radiation 105 may have a beam diameter of about 2.5 mm when leaving the flexible umbilical 130 and entering the electromagnetic radiation steering mechanism. The marking head 125 may, for example be capable of marking products with about 2000 characters per second. The characters may have a height of about 2 mm. When used for marking a product, the electromagnetic radiation 105 exiting the marking head 10 may have a beam diameter of between about 200 µm and about 300 µm. When used for engraving a product, the electromagnetic radiation 105 exiting the marking head 10 may have a beam diameter of between about 10 µm and about 15 µm.

Electromagnetic radiation 105 may be provided to the marking head by a radiation source such as, for example, a CO₂ laser or a diode laser. Referring to FIG. 5, the umbilical assembly 130 may be connected to the housing 125 of the marking head 10. An optical fibre of the umbilical assembly 130 may direct the radiation 105 to the collimator 200 in the marking head 10. The collimator 200 may condition the radiation 105 in a desired manner before directing the radiation 105 to focussing optics 210 for further conditioning as desired.

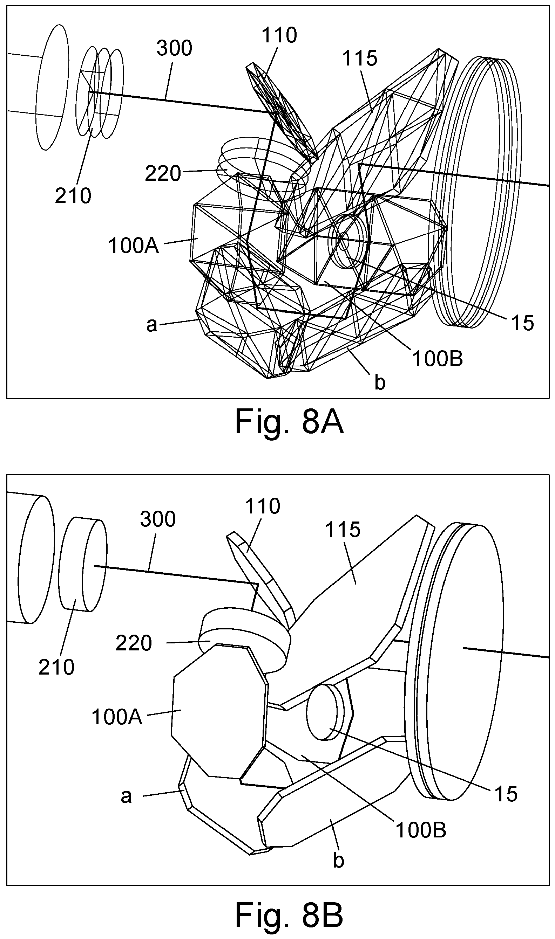

FIG. 8A schematically depicts a marking beam path 300 through a portion of a marking head including a third optical element 15 in which optical components are shown using transparent wire bodies. A radiation beam travels through the marking head along the marking beam path 300 in the same way as the radiation beam 105 travels through the marking head 10 of FIGS. 6 and 7. FIG. 8B schematically depicts the marking head of FIG. 8A in which the optical components are shown using opaque full bodies. In both FIG. 8A and FIG. 8B, the marking head is in the first arrangement in which the radiation beam is directed along the marking beam path 300 that is within a marking range of the marking head. The first moveable optical element 100A and the second moveable optical element 100B are in a first configuration that causes the radiation beam to follow the marking beam path 300. The third optical element 15 is outside of the marking beam path 300. Thus, the radiation beam does not interact with the third optical element 15 when the marking head is in the first arrangement.

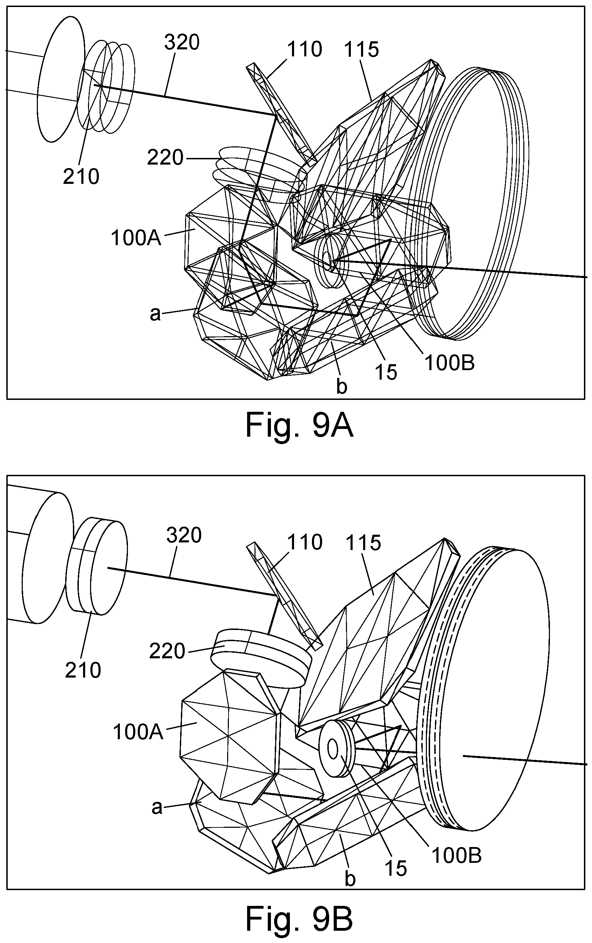

FIG. 9A schematically depicts a different beam path 320 through the marking head of FIG. 8A in which the optical components are shown using transparent wire bodies. A radiation beam travels through the marking head along the different beam path 320 in a way that is different to the way in which the radiation beam 105 travels through the marking head 10 of FIGS. 6 and 7. FIG. 9B schematically depicts the side view of FIG. 9A in which the optical components are shown using opaque full bodies. In both FIG. 9A and FIG. 9B, the marking head is in the second arrangement in which the radiation beam is directed along the different beam path 320 that is outside the marking range of the marking head. The first moveable optical element 100A and the second moveable optical element 100B are in a second configuration that causes the radiation beam to follow the different beam path 320. The first optical element 100A shown in FIG. 9A and FIG. 9B has been rotated to a different rotational position compared to and first optical element 100A shown in FIG. 8A and FIG. 8B. The second optical element 100B shown in FIG. 9A and FIG. 9B has been rotated to a different rotational position compared to the second optical element 100B shown in FIG. 8A and FIG. 8B. This results in the radiation beam reflecting from the second optical element 100B and being incident on the third optical element 15 rather than being incident on the fourth reflector 115. In alternative embodiments, the configuration (e.g. rotational position) of only one of the first optical element 100A and the second optical element 100B may be adjusted to switch between the marking beam path 300 and the different beam path 320. The radiation beam reflects from the third optical element 15 and exits the marking head along the different beam path 320. The first moveable optical element 100A and the second moveable optical element 100B are driven by actuators A, B that drive the first optical element 100A and the second optical element 100B between the first and second configurations at a frequency of about 20Hz or more. This results in the marking beam path 300 and the different beam path 320 being simultaneously visible to the naked eye at the target.

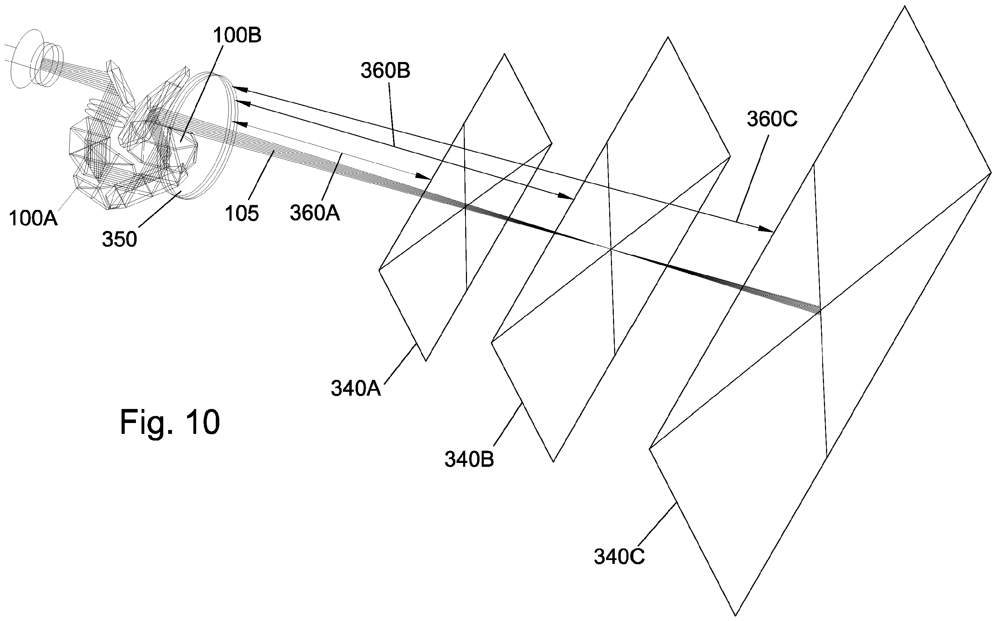

FIG. 10 schematically depicts a radiation beam exiting the marking head of FIG. 9A and being incident upon three different two dimensional fields of view 340A-C. Each two dimensional field of view 340A-C may correspond to an imaginary plane at a fixed distance from the marking head onto which the radiation beam 105 is projected. For example, each two dimensional field of view 340A-C may be substantially coplanar with a portion of a surface of a target such as a product that is to be marked using the radiation beam 105. A size of each two dimensional field of view 340A-C may at least partially depend upon its distance 360A-C from an output aperture 350 of the marking head and a marking range of angles 14a of the marking head (as discussed in relation to FIG. 1). A first two dimensional field of view 340A is at a first distance 360A from the output aperture 350, a second two dimensional field of view 340B is at a second distance 360B from the output aperture 350 and a third two dimensional field of view 340C is at a third distance 360C from the output aperture 350. For example, a distance between the output of the marking head and the product to be marked may be about 10 mm or more. For example, a distance between the output of the marking head and the product to be marked may be about 1000 mm or less. The two dimensional field of view may, for example, have dimensions of about 10 mm by about 20 mm or more. The two dimensional field of view may, for example, have dimensions of about 1000 mm by about 2000 mm or less.

The focussing optics within the marking head cause the radiation beam 105 to converge and diverge at different points along its beam path. At the first two dimensional field of view 340A the radiation beam 105 is converging but is not yet in focus. At the second two dimensional field of view 340B the radiation beam is in focus. At the third two dimensional field of view 340C the radiation beam 105 is diverging. In the example of FIG. 10, the pre-determined distance at which the pre-determined condition is satisfied is equal to the second distance 360B. That is, the radiation beam 105 is in focus at the second two dimensional field of view 340B.

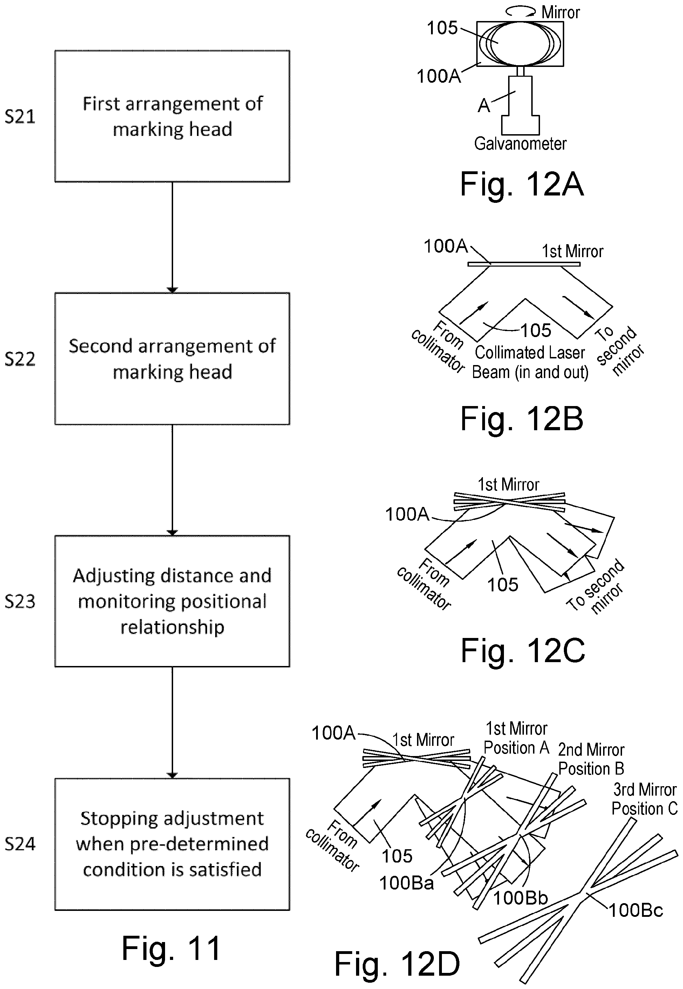

FIG. 11 shows a flowchart of a method of positioning a marking head of a laser marking system a pre-determined distance away from a target. A first step S21 includes arranging the marking head in a first arrangement in which the radiation beam is directed along a marking beam path that is within a marking range of the marking head. A second step S22 includes arranging the marking head in a second arrangement in which the radiation beam is directed along a different beam path that is not within the marking range of the marking head. A third step S23 includes monitoring a positional relationship between the marking beam path and the different beam path whilst adjusting a distance between the marking head and the target. A fourth step S24 includes stopping adjustment of the distance between the marking head and the target when the positional relationship satisfies a pre-determined condition.

FIG. 12, consisting of FIGS 12A-D, schematically depicts a radiation beam 105 deflecting from a first moveable optical element 100A and being incident on a second moveable optical element 100B. FIGS 12A-D demonstrate the effect that the rotational range of movement of the first optical element 100A has on the required size of the second optical element 100B. FIG. 12A schematically depicts a view from the side of the first moveable optical element 100A in a plurality of rotational positions and a radiation beam 105 incident on the first moveable optical element 100A. As previously discussed, the first optical element 100A has an associated first actuator A configured to rotate the first optical element 100A about a first rotational axis to change a first coordinate of a first steering axis in the two-dimensional field of view of the marking head. The radiation beam 105 is typically collimated by a collimator before being incident upon the first moveable optical element 100A. The collimated radiation beam 105 has a given beam diameter (i.e. cross-sectional area). At an output aperture of the marking head the radiation beam 105 may be focussed towards a target such as a product to be marked. The larger the beam diameter of the radiation beam 105 the easier it is to focus the radiation beam down to a smaller beam diameter at the target. The first optical element 100A and the second optical element 100B are sized so as to be able to fit the entire beam diameter of the radiation beam on the first and second optical elements 100A, B regardless of the configuration of the first and second optical elements 100A,B. That is, whatever rotational position the first and second optical elements 100A,B may be in (provided they are within a normal marking range), the first and second optical elements 100A,B are large enough to capture the entire radiation beam 105 incident upon them.

FIG. 12B schematically depicts a view from above the first moveable optical element 100A in a single rotational position. The radiation beam 105 reflects from the first moveable optical element 100A and propagates towards the second moveable optical element 100B. FIG. 12C schematically depicts a view from above the first moveable optical element 100A in a plurality of different rotational positions. As can be seen, the direction in which the radiation beam 105 propagates after interacting with the first optical element 100A depends upon the rotational position of the first optical element 100A.

FIG. 12D schematically depicts a view from above the first moveable optical element 100A in a plurality of different rotational positions and three different second optical elements 100Ba-c in pluralities of different rotational positions. As can be seen, the greater the optical path length between the first optical element 100A and the second optical elements 100Ba-c, the greater the size of the second optical element must be in order to capture the entirety of the radiation beam 105 at all rotational positions of the first optical element 100A. In order to fit the incoming beam the first optical element has a size that is at least partially dependent on an angular freedom of the first optical element 100A. In addition, the larger the range of rotational movement of the first optical element, 100A, the larger the second optical element needs to be in order to capture the entirety of the radiation beam 105 reflecting from the first optical element 100A. Furthermore, the greater the angular range of movement of the second optical element 100B, the larger the second optical element 100B must be in order to ensure that the radiation beam 105 can be reflected across the desired range of angles. Finally, the size of both optical elements 100A, 100B must increase as the beam diameter of the radiation beam 105 increases such that both optical elements can fully interact with the incident radiation beam.

Reducing the size of the first and second optical elements 100A, B allows the first and second optical elements 100A, B to be driven at greater speeds. This is because, at smaller sizes, the first and second optical elements 100A,B have less inertia and can be moved (e.g. rotated) at greater speeds, and accelerated at greater rates of acceleration, thereby increasing the scanning speed that the marking head is capable of. Reducing the sizes of the first and second optical elements 100A, B also advantageously reduces the total size and weight of the marking head. However, as previously discussed, the radiation beam 105 must be able to fit on the first and second optical elements 100A, B. It is the largest of the two optical elements 100A, B that is the scanning speed limiting factor for the marking head. As discussed above and shown in Figure 12D, the second optical element 100B is larger than the first optical element 100A so as to capture the radiation beam 105 across an entirety of the rotational range of movement of the first optical element 100A. In this instance, increasing the size of the first optical element 100A does not decrease speed performance as long as the first optical element 100A remains smaller than the second optical element 100B.

Known marking heads comprise first and second optical elements having the same range of rotational movement, thus creating a marking field having a substantially square shape. It has been realised that by reducing the angular freedom of the first optical element, the size of the second optical element may be reduced, and the scanning speed of the marking head may be increased. Whilst this reduces the size of the two dimensional field of view, a majority of uses of the marking heads may typically require a rectangular shaped two dimensional field of view, and thus scanning speed gains can be made whilst maintaining the suitability of the marking head for a majority of use cases. The majority of use cases may involve, for example, marking a product with one or two small lines of text, such as a sell by date and production line information.

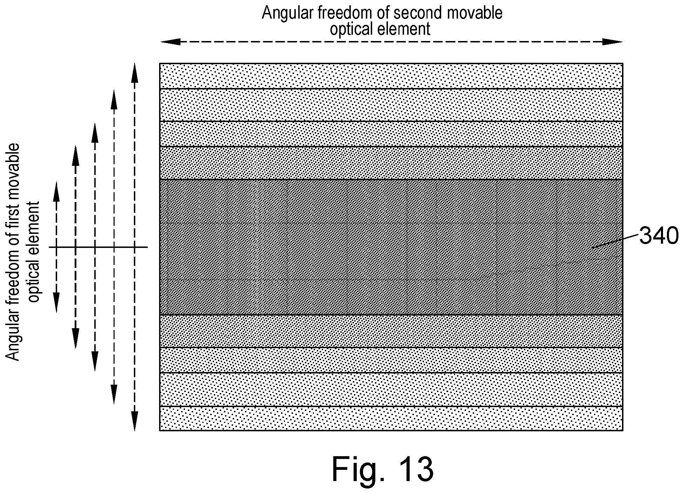

FIG. 13 schematically depicts the effect of reducing the angular freedom of the first optical element on a two dimensional field of view 340 of the marking head. As can be seen, as the angular freedom of the first optical element is reduced, the two dimensional field of view becomes narrower. A size of the two dimensional field of view along the first steering axis (which is associated with the first optical element) is smaller than a size of the two dimensional field of view along the second steering axis (which is associated with the second optical element). That is, the first optical element is associated with a smaller dimension of the two dimensional field of view 340 than the second optical element.

Limiting the angular freedom of the first moveable optical element also advantageously allows the moveable optical elements to be located closer to one another within the marking head. This is because each moveable optical element has an operational volume that is defined by the size and angular freedom of the moveable optical elements. This is the smallest volume that would fit the optical element in all possible angular positions of the optical element. Of course, the two operational volumes of the moveable optical elements should not intersect to avoid the moveable optical elements from coming into contact with each other. Thus, by reducing the angular freedom of the first optical element, the distance between the moveable optical elements within the marking head may be reduced and the marking head can be more compact.

Referring again to FIG. 10, it can be seen that a size of the two dimensional field of view along the first steering axis (which is associated with the first optical element) is smaller than a size of the two dimensional field of view along the second steering axis (which is associated with the second optical element).

The first and second actuators A, B illustrated in FIG. 6 are, in some embodiments, galvanometer motors. Galvanometer motors are commonly used to control the position of optical components with a high degree of precision, especially when the components are required to move at high speed. For example, in the laser marking system described herein, the galvanometer motors may be required to cause the radiation beam to write on products passing the marking head, at a rate of about 2000 characters per second.

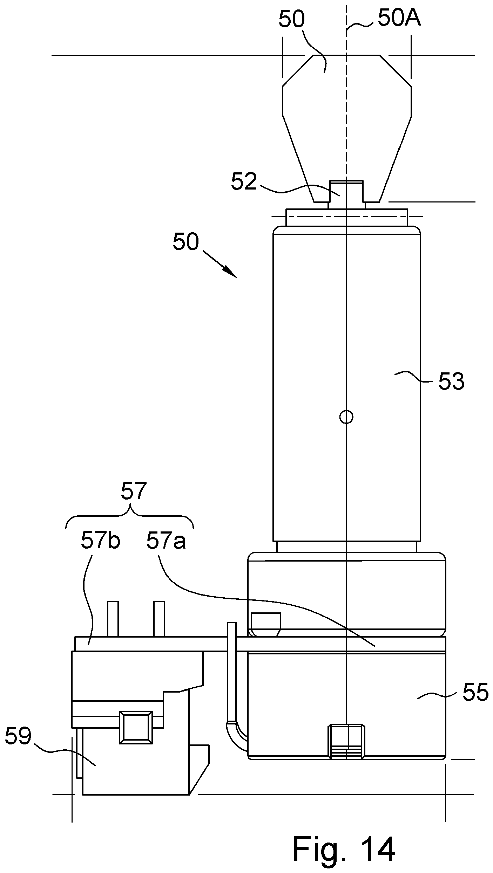

FIG. 14 schematically depicts a known galvanometer motor 50. The galvanometer motor 50 is coupled to and actuates a mirror 51. The galvanometer 50 comprises a body 53, which is cylindrical in shape and is concentric with the rotation axis 50A. An output shaft (not shown) of the galvanometer extends from the body 53 along the rotation axis 50A and is coupled to the mirror 51 by a clip 52. The body 53 houses a coil, which can be energised by a control signal in order to control the angular position of the output shaft, and thereby the position of the mirror 51. The galvanometer 50 further comprises a position detector 55, which is also substantially cylindrical in shape and concentric with the rotation axis 50A. The position detector 55 comprises components configured to accurately detect the angular position of the shaft and to generate an output signal indicative of the angular position of the shaft.

A circuit board 57 is disposed between the body 53 and the position detector 55. The circuit board 57 supports and connects various components and connectors required for the operation of the galvanometer. For example, the circuit board receives wires for providing the control signal to the galvanometer coil, and wires providing the output signal indicative of the angular position of the shaft. The circuit board 57 supports internal position sensing components of the position sensor, and corresponding wires providing output signals. The housing of the position detector 55 may contain or support a position sensor light source (e.g. an LED). The circuit board 57 also supports a connector 59 which provides an electrical connection with external control circuitry, which may be provided elsewhere within the marking head, or alternatively in the laser marking system controller, which may be connected to the marking head by the umbilical 130.

As can be seen in FIG. 14, the circuit board comprises a first region 57a which is disposed directly between the body 53 and the position detector 55, and a second region 57b which extends from the side of the galvanometer 50 away in a direction perpendicular to the axis 50A. The first region 57a supports the internal position sensing components (not shown) and provides connections to the coil and the internal components of the position detector 55. The second region 57b supports the connector 59. Wiring traces are provided on the surface of the circuit board 57 to connect the connector 59 with the internal components of the body 53 and the position detector 55.

As can be seen in FIG. 14, the second region 57b of the circuit board 57 protrudes a distance from the side of the galvanometer 50, for example by a distance which is greater than a half of the width of the galvanometer 50. Such an arrangement may restrict the positioning of the galvanometer within a marking head.

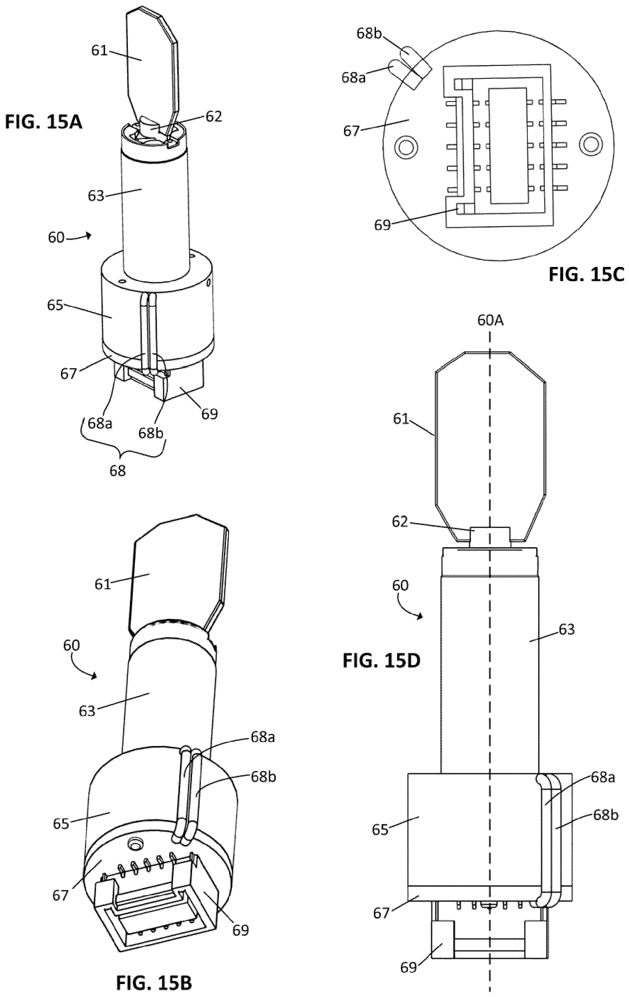

When arranged within a housing 125 of a marking head, the space around the galvanometer motors may be highly constrained. It has been realised that rather than adopting a conventional arrangement in which the connections to the galvanometer sensing and control circuitry is provided on the circuit board extending from the side of the galvanometer housing, as shown in FIG. 14, a more efficient spatial arrangement can be devised if the connections to the galvanometer sensing and control circuitry are provided on a circuit board which is provided at an end of the galvanometer housing. Such an arrangement is shown in FIGs 15A-D.

FIGs 15A-D show a galvanometer motor 60. The components of the galvanometer motor 60 are generally equivalent in function to those of the galvanometer motor 50. The galvanometer motor 60 is coupled to and actuates a mirror 61, and comprises a body 63, which is cylindrical in shape and is concentric with the rotation axis 60A. An output shaft (not shown) of the galvanometer extends from the body 63 along the rotation axis 60A and is coupled to the mirror 61 by a clip 62. The body 63 houses a coil, which is energised by a control signal in order to control the angular position of the output shaft, and thereby the position of the mirror 61. The galvanometer 60 further comprises a position detector 65, which is also substantially cylindrical in shape and concentric with the rotation axis 60A.

A circuit board 67 is disposed at the base of the housing of the position detector 65. The circuit board 67 supports a connector 69, which provides an electrical connection with external control circuitry. The connector 69 may comprise a cable (not shown). The circuit board 67 may also support internal position sensing components of the position sensor 65, a position sensor light source (e.g. an LED). However, rather than extending beyond the side of the cylindrical position detector 65, the circuit board 67 does not extend beyond the extent of the position detector 65 in a direction extending perpendicular from the axis 60A.

In order to provide electrical connections to the coil (which is within the body 63), wires 68 are provided between the circuit board 67 and the body 63. An internal circuit board (not shown) may be provided within the position detector 65. The internal circuit board may support various electronic components and connectors required for the operation of the galvanometer 60. The wires 68 may comprise a first wire 68a which carries a control signal for the coil, and a second wire 68b which carries a second control signal for the coil (e.g. so as to connect to either ends of the coil). The wires 68a, 68b extend from the circuit board 67, and pass along the outer surface of the position detector 65, parallel with the axis 60A, and enter the internal space of the galvanometer 60 in the region of the junction between the position detector 65 and the body 63. The wires 68a, 68b maybe non-protected, narrow gauge wires.

As such, rather than there being a circuit board 57 having distinct first and second regions, the external connector 69 is provided on a single external circuit board 67, thereby significantly reducing the maximum cross-sectional dimension of the galvanometer 60 (as compared to the conventional galvanometer 50). In the example of the external connector comprising a cable, the cable may extend from the single circuit board 67, thereby also providing the advantage of significantly reducing the maximum cross-sectional dimension of the galvanometer 60 (as compared to the conventional galvanometer 50). Alternatively, the cable may replace the circuit board 57. Various internal components may be provided on the internal circuit board. This difference can be most clearly seen by comparing FIG. 14 with FIG 15D.

In some embodiments, the circuit board 67 and/or the connector 69 and may be omitted. In such embodiments, wiring (such as a cable) may be arranged to emerge from the second end of the galvanometer (i.e. the bottom end as shown in FIGS 15A-C) rather than the curved outer surfaces of the body 63 or position detector 65. To the extent that wiring may be arranged to emerge from the curved outer surfaces of the body 63 or position detector 65, it is preferably arranged so as to run in a direction substantially parallel to the axis 60A, as with wires 68a, 68b, so as to minimise the cross-sectional area of the galvanometer as seen when looking along the axis 60A. Moreover, where the galvanometer is directly wired (i.e. rather than using a connector), it will be understood that any wiring may be provided with robust insulation, shielding and kink protection, to prevent damage to the internal wires. If such a wire was configured to exit from the curved outer surfaces of the body 63 or position detector 65, this would restrict the ability to position other components immediately adjacent to the galvanometer. As such, arranging the wires to exit from the bottom end of the galvanometer is advantageous.

The connector 69 or, in the absence of a connector, the wires exiting the second end of the galvanometer, may be referred to as an electrical interface.

In some embodiments, as noted above, the actuators A, B may be motors other than galvanometers, such as, for example, brushless DC motors. In such embodiments, it may be preferably to ensure that any connectors or wires are arranged to minimise the cross sectional area when viewed along the axis of rotation.

Having thus described several aspects of at least one implementation, it is to be appreciated various alterations, modifications, and improvements will readily occur to those skilled in the art. Such alterations, modifications, and improvements are intended to be part of this disclosure, and are intended to be within the spirit and scope of the disclosure. The acts of methods disclosed herein may be performed in alternate orders than illustrated, and one or more acts may be omitted, substituted, or added. One or more features of any one example disclosed herein may be combined with or substituted for one or more features of any other example disclosed. Accordingly, the foregoing description and drawings are by way of example only.

The phraseology and terminology used herein is for the purpose of description and should not be regarded as limiting. As used herein, the term "plurality" refers to two or more items or components. As used herein, dimensions which are described as being "substantially" similar may be considered to be within about 25% of one another. The terms "comprising," "including," "carrying," "having," "containing," and "involving," whether in the written description or the claims and the like, are open-ended terms, i.e., to mean "including but not limited to." Thus, the use of such terms is meant to encompass the items listed thereafter, and equivalents thereof, as well as additional items. Only the transitional phrases "consisting of" and "consisting essentially of," are closed or semi-closed transitional phrases, respectively, with respect to the claims. Use of ordinal terms such as "first," "second," "third," and the like in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

The marking head may include various types of optical components, such as refractive, reflective, magnetic, electromagnetic, electrostatic, and/or other types of optical components, or any combination thereof, for directing, shaping, and/or controlling electromagnetic radiation.

Although specific reference may be made in this text to the use of an electromagnetic radiation steering mechanism in the marking of products, it should be understood that the electromagnetic radiation steering mechanism described herein may have other applications. Possible other applications include laser systems for engraving products, optical scanners, radiation detection systems, medical devices, electromagnetic radiation detectors such as a camera or a time-of-flight sensor in which radiation may exit and re-enter the sensor, etc.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. An electromagnetic radiation system (10) for directing an electromagnetic radiation beam (11) at a target (28) having a first arrangement in which the radiation beam (11) is directed along a marking beam path (11a-c) that is within a marking range of the electromagnetic radiation system (10) and a second arrangement in which the radiation beam (11) is directed along a different beam path (11d) that is not within the marking range of the electromagnetic radiation system (10), wherein a positional relationship between the marking beam path (11a-c) and the different beam path (11d) satisfies a pre-determined condition at the target (28) when the electromagnetic radiation system (10) is at a pre-determined distance (29) from the target (28),
**characterised in that** the electromagnetic radiation system (10) comprises:
a first moveable optical element (100A) comprising a first configuration that causes the radiation beam (11) to follow the marking beam path (11a-c) and a second configuration that causes the radiation beam (11) to follow the different beam path (11d), and
an actuator (A, B) configured to drive the first optical element (100A) between the first and second configurations.

2. The electromagnetic radiation system (10) of claim 1, wherein:
the positional relationship is such that a change in distance between the electromagnetic radiation system (10) and the target (28) causes a corresponding change in a separation (32a-d) between the marking beam path (11a-c) and the different beam path (11d) in a plane (16) of the target (28),
and/or
the positional relationship is such that a predetermined change in the distance between the electromagnetic radiation system (10) and the target (28) causes a first predetermined change in a separation (32a-d) between the marking beam path (11a-c) and the different beam path (11d) in a plane (16) of the target (28) and a second change in the cross-sectional area of the radiation beam (11) in the plane (16) of the target (28), said first predetermined change being greater than said second change,
and/or
the pre-determined condition comprises the marking beam path (11a-c) and the different beam path (11d) being separated from one another in a plane (16) of the target (28) by a distance that is within an acceptable range of values,
and/or
the pre-determined condition comprises the marking beam path (11a-c) and the different beam path (11d) substantially coinciding with each other in a plane (16) of the target (28).

3. The electromagnetic radiation system (10) of claim 1 or claim 2, wherein the marking beam path (11a-c) varies to trace a marking beam pattern (30) on the plane (16) of the target (28),
and optionally
wherein the marking beam pattern (30) is a ring.

4. The electromagnetic radiation system (10) of any of claims 1 to 3 comprising a second moveable optical element (100B), wherein the second moveable optical element (100B) comprises a first configuration that causes the radiation beam (11) to follow the marking beam path (11a-c) and a second configuration (11d) that causes the radiation beam (11) to follow the different beam path (11d),
and optionally
wherein the second moveable optical element (100B) is driven by the actuator (A, B) and the actuator is configured to drive the first optical element (100A) between the first and second configurations at a frequency of about 20Hz or more.

5. The electromagnetic radiation system (10) of claim 4, wherein the moveable first optical element (100A) and/or the second moveable optical element (100B) forms part of an electromagnetic steering mechanism (12) of the electromagnetic radiation system (10).

6. The electromagnetic radiation system (10) of any of claims 1 to 5 comprising a third optical element (15) located outside of the marking beam path (11a-c) and inside the different beam path (11d),
and optionally
wherein the third optical element (15) is fixed.

7. The electromagnetic radiation system (10) of any of claims 1 to 6, wherein the radiation beam (11) comprises a visible wavelength,
and optionally
wherein the visible wavelength corresponds to green light.

8. The electromagnetic radiation system (10) of any of claims 1 to 7, wherein a source of the radiation beam (11) is optically coupled to a first end of an optical fibre (130) and the electromagnetic radiation system (10) is optically coupled to a second end of the optical fibre (130).

9. The electromagnetic radiation system (10) of any of claims 1 to 8 comprising a camera (40) configured to monitor the positional relationship between the marking beam path (11a-c) and the different beam path (11d).

10. A system comprising the electromagnetic radiation system (10) of claim 9 and an electromagnetic radiation system position adjuster (45) configured to receive information relating to the positional relationship between the marking beam path (11a-c) and the different beam path (11d) from the camera (40) and use the information to adjust a position of the electromagnetic radiation system (10) until the pre-determined condition is satisfied.

11. A method of calibrating an electromagnetic radiation system (10) for directing an electromagnetic radiation beam (11) at a target (28) having a first arrangement in which the radiation beam (11) is directed along a marking beam path (11a-c) that is within a marking range of the electromagnetic radiation system (10) and a second arrangement in which the radiation beam (11) is directed along a different beam path (11d) that is not within the marking range of the electromagnetic radiation system (10), wherein a positional relationship between the marking beam path (11a-c) and the different beam path (11d) satisfies a pre-determined condition at the target (28) when the electromagnetic radiation system (10) is at a pre-determined distance (29) from the target (28)
**characterised in that** the electromagnetic radiation system (10) comprises:
a first moveable optical element (100A) comprising a first configuration that causes the radiation beam (11) to follow the marking beam path (11a-c) and a second configuration that causes the radiation beam (11) to follow the different beam path (11d), and
an actuator (A, B) configured to drive the first optical element (100A) between the first and second configurations,
and **in that** the method comprises the following steps:
determining the pre-determined distance (29);
determining the positional relationship between the marking beam path (11a-c) and the different beam path (11d) at the pre-determined distance (29);
determining configuration data in dependence on the positional relationship; and,
storing the configuration data in memory.

12. The method of claim 11, wherein the electromagnetic radiation system (10) comprises a second moveable optical element (100B), wherein the second moveable optical element (100A) comprises a first configuration that causes the radiation beam (11) to follow the marking beam path (11a-c) and a second configuration that causes the radiation beam (11) to follow the different beam path (11d), and wherein the configuration data comprises the first and second configurations of the first optical element (100A) and/or the second optical element (100B) that cause the pre-determined condition to be satisfied.

13. The method of claim 11 or claim 12, wherein:
determining the pre-determined distance (29) comprises measuring a focal length of the electromagnetic radiation system (10),
and/or
determining the positional relationship between the marking beam path (11a-c) and the different beam path (11d) at the pre-determined distance (29) comprises adjusting the first and/or second configuration of the first moveable optical element (100A) and/or the second moveable optical element (100B) until the marking beam path (11a-c) and the different beam path (11d) substantially coincide with each other at the pre-determined distance (29).

14. A method of positioning an electromagnetic radiation system (10) a pre-determined distance (29) away from a target (28) comprising:
arranging the electromagnetic radiation system (10) in a first arrangement in which the radiation beam (11) is directed along a marking beam path (11a-c) that is within a marking range of the electromagnetic radiation system (10);
arranging the electromagnetic radiation system (10) in a second arrangement in which the radiation beam (11) is directed along a different beam path (11d) that is not within the marking range of the electromagnetic radiation system (10);
monitoring a positional relationship between the marking beam path (11a-c) and the different beam path (11d) whilst adjusting a distance between the electromagnetic radiation system (10) and the target (28); and,
stopping adjustment of the distance between the electromagnetic radiation system (10) and the target (28) when the positional relationship satisfies a pre-determined condition,
**characterised in that** the electromagnetic radiation system (10) comprises:
a first moveable optical element (100A) comprising a first configuration that causes the radiation beam (11) to follow the marking beam path (11a-c) and a second configuration that causes the radiation beam (11) to follow the different beam path (11d), and
an actuator (A, B) configured to drive the first optical element (100A) between the first and second configurations.

15. A method of marking a product (28) **characterised by** using the electromagnetic radiation system (10) of any of claims 1 to 10.

## Patentansprüche

1. Elektromagnetisches Strahlungssystem (10) zum Richten eines elektromagnetischen Strahlungsstrahls (11) auf ein Ziel (28) mit einer ersten Anordnung, in der der Strahlungsstrahl (11) entlang eines Markierungsstrahlenwegs (11a-c) gerichtet wird, der innerhalb eines Markierungsbereichs des elektromagnetischen Strahlungssystems (10) liegt, und einer zweiten Anordnung, in der der Strahlungsstrahl (11) entlang eines anderen Strahlenwegs (11d) gerichtet wird, der nicht innerhalb des Markierungsbereichs des elektromagnetischen Strahlungssystems (10) liegt, wobei eine Positionsbeziehung zwischen dem Markierungsstrahlenweg (11a-c) und dem anderen Strahlenweg (11d) eine vorbestimmte Bedingung an dem Ziel (28) erfüllt, wenn sich das elektromagnetische Strahlungssystem (10) in einem vorbestimmten Abstand (29) von dem Ziel (28) befindet,
**dadurch gekennzeichnet, dass** das elektromagnetische Strahlungssystem (10) Folgendes umfasst:
ein erstes bewegliches optisches Element (100A), das eine erste Konfiguration, die den Strahlungsstrahl (11) veranlasst, dem Markierungsstrahlenweg (11a-c) zu folgen, und eine zweite Konfiguration umfasst, die den Strahlungsstrahl (11) veranlasst, dem anderen Strahlenweg (11d) zu folgen, und
einen Stellantrieb (A, B), der dafür konfiguriert ist, das erste optische Element (100A) zwischen der ersten und der zweiten Konfiguration anzutreiben.

2. Elektromagnetisches Strahlungssystem (10) nach Anspruch 1, wobei:
die Positionsbeziehung derart ist, dass eine Änderung eines Abstands zwischen dem elektromagnetischen Strahlungssystem (10) und dem Ziel (28) eine entsprechende Änderung einer Trennung (32a-d) zwischen dem Markierungsstrahlenweg (11a-c) und dem anderen Strahlenweg (11d) in einer Ebene (16) des Ziels (28) veranlasst,
und/oder
die Positionsbeziehung derart ist, dass eine vorbestimmte Änderung des Abstands zwischen dem elektromagnetischen Strahlungssystem (10) und dem Ziel (28) eine erste vorbestimmte Änderung einer Trennung (32a-d) zwischen dem Markierungsstrahlenweg (11a-c) und dem anderen Strahlenweg (11d) in einer Ebene (16) des Ziels (28) und eine zweite Änderung der Querschnittszone des Strahlungsstrahls (11) in der Ebene (16) des Ziels (28) veranlasst, wobei die erste vorbestimmte Änderung größer als die zweite Änderung ist,
und/oder
die vorbestimmte Bedingung umfasst, dass der Markierungsstrahlenweg (11a-c) und der andere Strahlenweg (11d) voneinander in einer Ebene (16) des Ziels (28) um einen Abstand getrennt sind, der innerhalb eines annehmbaren Wertebereichs liegt,
und/oder
die vorbestimmte Bedingung umfasst, dass der Markierungsstrahlenweg (11a-c) und der andere Strahlenweg (11d) im Wesentlichen in einer Ebene (16) des Ziels (28) zusammenfallen.

3. Elektromagnetisches Strahlungssystem (10) nach Anspruch 1 oder Anspruch 2, wobei der Markierungsstrahlenweg (11a-c) variiert, um ein Markierungsstrahlenmuster (30) auf der Ebene (16) des Ziels (28) zu verfolgen,
und optional
wobei das Markierungsstrahlenmuster (30) ein Ring ist.

4. Elektromagnetisches Strahlungssystem (10) nach einem der Ansprüche 1 bis 3, umfassend ein zweites bewegliches optisches Element (100B), wobei das zweite bewegliche optische Element (100B) eine erste Konfiguration, die den Strahlungsstrahl (11) veranlasst, dem Markierungsstrahlenweg (11a-c) zu folgen, und eine zweite Konfiguration (11d) umfasst, die den Strahlungsstrahl (11) veranlasst, dem anderen Strahlenweg (11d) zu folgen,
und optional
wobei das zweite bewegliche optische Element (100B) von dem Stellantrieb (A, B) angetrieben wird und der Stellantrieb dafür konfiguriert ist, das erste optische Element (100A) zwischen der ersten und der zweiten Konfiguration bei einer Frequenz von etwa 20 Hz oder mehr anzutreiben.

5. Elektromagnetisches Strahlungssystem (10) nach Anspruch 4, wobei das erste bewegliche optische Element (100A) und/oder das zweite bewegliche optische Element (100B) Teil eines elektromagnetischen Lenkmechanismus (12) des elektromagnetischen Strahlungssystems (10) bilden.

6. Elektromagnetisches Strahlungssystem (10) nach einem der Ansprüche 1 bis 5, umfassend ein drittes optisches Element (15), das sich außerhalb des Markierungsstrahlenwegs (11a-c) und innerhalb des anderen Strahlenwegs (11d) befindet,
und optional
wobei das dritte optische Element (15) feststehend ist.

7. Elektromagnetisches Strahlungssystem (10) nach einem der Ansprüche 1 bis 6, wobei der Strahlungsstrahl (11) eine sichtbare Wellenlänge umfasst,
und optional
wobei die sichtbare Wellenlänge grünem Licht entspricht.

8. Elektromagnetisches Strahlungssystem (10) nach einem der Ansprüche 1 bis 7, wobei eine Quelle des Strahlungsstrahls (11) optisch mit einem ersten Ende einer Glasfaser (130) gekoppelt ist und das elektromagnetische Strahlungssystem (10) optisch mit einem zweiten Ende der Glasfaser (130) gekoppelt ist.

9. Elektromagnetisches Strahlungssystem (10) nach einem der Ansprüche 1 bis 8, umfassend eine Kamera (40), die dafür konfiguriert ist, die Positionsbeziehung zwischen dem Markierungsstrahlenweg (11a-c) und dem anderen Strahlenweg (11d) zu überwachen.

10. System, umfassend das elektromagnetische Strahlungssystem (10) nach Anspruch 9 und eine Positionseinstellvorrichtung (45) eines elektromagnetischen Strahlungssystems, die dafür konfiguriert ist, Informationen betreffend die Positionsbeziehung zwischen dem Markierungsstrahlenweg (11a-c) und dem anderen Strahlenweg (11d) von der Kamera (40) zu empfangen und die Informationen zu verwenden, um eine Position des elektromagnetischen Strahlungssystems (10) einzustellen, bis die vorbestimmte Bedingung erfüllt ist.

11. Verfahren zum Kalibrieren eines elektromagnetischen Strahlungssystems (10) zum Richten eines elektromagnetischen Strahlungsstrahls (11) auf ein Ziel (28) mit einer ersten Anordnung, in der der Strahlungsstrahl (11) entlang eines Markierungsstrahlenwegs (11a-c) gerichtet wird, der innerhalb eines Markierungsbereichs des elektromagnetischen Strahlungssystems (10) liegt, und einer zweiten Anordnung, in der der Strahlungsstrahl (11) entlang eines anderen Strahlenwegs (11d) gerichtet wird, der nicht innerhalb des Markierungsbereichs des elektromagnetischen Strahlungssystems (10) liegt, wobei eine Positionsbeziehung zwischen dem Markierungsstrahlenweg (11a-c) und dem anderen Strahlenweg (11d) eine vorbestimmte Bedingung an dem Ziel (28) erfüllt, wenn sich das elektromagnetische Strahlungssystem (10) in einem vorbestimmten Abstand (29) von dem Ziel (28) befindet,
**dadurch gekennzeichnet, dass** das elektromagnetische Strahlungssystem (10) Folgendes umfasst:
ein erstes bewegliches optisches Element (100A), das eine erste Konfiguration, die den Strahlungsstrahl (11) veranlasst, dem Markierungsstrahlenweg (11a-c) zu folgen, und eine zweite Konfiguration umfasst, die den Strahlungsstrahl (11) veranlasst, dem anderen Strahlenweg (11d) zu folgen, und
einen Stellantrieb (A, B), der dafür konfiguriert ist, das erste optische Element (100A) zwischen der ersten und der zweiten Konfiguration anzutreiben,
und dass das Verfahren die folgenden Schritte umfasst:
Bestimmen des vorbestimmten Abstands (29);
Bestimmen der Positionsbeziehung zwischen dem Markierungsstrahlenweg (11a-c) und dem anderen Strahlenweg (11d) in dem vorbestimmten Abstand (29);
Bestimmen von Konfigurationsdaten in Abhängigkeit von der Positionsbeziehung; und
Speichern der Konfigurationsdaten in einem Speicher.

12. Verfahren nach Anspruch 11, wobei das elektromagnetische Strahlungssystem (10) ein zweites bewegliches optisches Element (100B) umfasst, wobei das zweite bewegliche optische Element (100A) eine erste Konfiguration, die den Strahlungsstrahl (11) veranlasst, dem Markierungsstrahlenweg (11a-c) zu folgen, und eine zweite Konfiguration umfasst, die den Strahlungsstrahl (11) veranlasst, dem anderen Strahlenweg (11d) zu folgen, und wobei die Konfigurationsdaten die erste und die zweite Konfiguration des ersten optischen Elements (100A) und/oder des zweiten optischen Elements (100B) umfassen, die veranlassen, dass die vorbestimmte Bedingung erfüllt wird.

13. Verfahren nach Anspruch 11 oder Anspruch 12, wobei:
das Bestimmen des vorbestimmten Abstands (29) das Messen einer Brennweite des elektromagnetischen Strahlungssystems (10) umfasst,
und/oder
das Bestimmen der Positionsbeziehung zwischen dem Markierungsstrahlenweg (11a-c) und dem anderen Strahlenweg (11d) in dem vorbestimmten Abstand (29) das Einstellen der ersten und/oder der zweiten Konfiguration des ersten beweglichen optischen Elements (100A) und/oder des zweiten beweglichen optischen Elements (100B) umfasst, bis der Markierungsstrahlenweg (11a-c) und der andere Strahlenweg (11d) im Wesentlichen in dem vorbestimmten Abstand (29) zusammenfallen.

14. Verfahren zum Positionieren eines elektromagnetischen Strahlungssystems (10) in einem vorbestimmten Abstand (29) weg von einem Ziel (28), umfassend:
Anordnen des elektromagnetischen Strahlungssystems (10) in einer ersten Anordnung, in der der Strahlungsstrahl (11) entlang eines Markierungsstrahlenwegs (11a-c) gerichtet wird, der innerhalb eines Markierungsbereichs des elektromagnetischen Strahlungssystems (10) liegt,
Anordnen des elektromagnetischen Strahlungssystems (10) in einer zweiten Anordnung, in der der Strahlungsstrahl (11) entlang eines anderen Strahlenwegs (11d) gerichtet wird, der nicht innerhalb des Markierungsbereichs des elektromagnetischen Strahlungssystems (10) liegt,
Überwachen einer Positionsbeziehung zwischen dem Markierungsstrahlenweg (11a-c) und dem anderen Strahlenweg (11d) während des Einstellens eines Abstands zwischen dem elektromagnetischen Strahlungssystem (10) und dem Ziel (28); und
Beenden der Einstellung des Abstands zwischen dem elektromagnetischen Strahlungssystem (10) und dem Ziel (28), wenn die Positionsbeziehung eine vorbestimmte Bedingung erfüllt,
**dadurch gekennzeichnet, dass** das elektromagnetische Strahlungssystem (10) Folgendes umfasst:
ein erstes bewegliches optisches Element (100A), das eine erste Konfiguration, die den Strahlungsstrahl (11) veranlasst, dem Markierungsstrahlenweg (11a-c) zu folgen, und eine zweite Konfiguration umfasst, die den Strahlungsstrahl (11) veranlasst, dem anderen Strahlenweg (11d) zu folgen, und
einen Stellantrieb (A, B), der dafür konfiguriert ist, das erste optische Element (100A) zwischen der ersten und der zweiten Konfiguration anzutreiben.

15. Verfahren zum Markieren eines Produkts (28), **gekennzeichnet durch** das Verwenden des elektromagnetischen Strahlungssystems (10) nach einem der Ansprüche 1 bis 10.

## Revendications

1. Système de rayonnement électromagnétique (10) pour diriger un faisceau de rayonnement électromagnétique (11) sur une cible (28) ayant un premier agencement dans lequel le faisceau de rayonnement (11) est dirigé le long d'une trajectoire de faisceau de marquage (11a-c) qui se trouve à l'intérieur d'une plage de marquage du système de rayonnement électromagnétique (10) et un deuxième agencement dans lequel le faisceau de rayonnement (11) est dirigé le long d'une trajectoire de faisceau différente (11d) qui ne se trouve pas à l'intérieur de la plage de marquage du système de rayonnement électromagnétique (10), dans lequel une relation de position entre la trajectoire de faisceau de marquage (11a-c) et la trajectoire de faisceau différente (11d) satisfait une condition prédéterminée au niveau de la cible (28) lorsque le système de rayonnement électromagnétique (10) se trouve à une distance prédéterminée (29) de la cible (28),
**caractérisé en ce que** le système de rayonnement électromagnétique (10) comprend :
un premier élément optique mobile (100A) comprenant une première configuration qui amène le faisceau de rayonnement (11) à suivre la trajectoire de faisceau de marquage (11a-c) et une deuxième configuration qui amène le faisceau de rayonnement (11) à suivre la trajectoire de faisceau différente (11d), et
un actionneur (A, B) configuré pour entraîner le premier élément optique (100A) entre les première et deuxième configurations.

2. Système de rayonnement électromagnétique (10) selon la revendication 1, dans lequel :
la relation de position est telle qu'une modification de distance entre le système de rayonnement électromagnétique (10) et la cible (28) provoque une modification correspondante d'une séparation (32a-d) entre la trajectoire de faisceau de marquage (11a-c) et la trajectoire de faisceau différente (11d) dans un plan (16) de la cible (28),
et/ou
la relation de position est telle qu'une modification prédéterminée de la distance entre le système de rayonnement électromagnétique (10) et la cible (28) provoque une première modification prédéterminée d'une séparation (32a-d) entre la trajectoire de faisceau de marquage (11a-c) et la trajectoire de faisceau différente (11d) dans un plan (16) de la cible (28) et une deuxième modification de la zone transversale du faisceau de rayonnement (11) dans le plan (16) de la cible (28), ladite première modification prédéterminée étant plus grande que ladite deuxième modification,
et/ou
la condition prédéterminée comprend la trajectoire de faisceau de marquage (11a-c) et la trajectoire de faisceau différente (11d) séparées l'une de l'autre dans un plan (16) de la cible (28) par une distance qui se trouve à l'intérieur d'une plage de valeurs acceptable,
et/ou
la condition prédéterminée comprend la trajectoire de faisceau de marquage (11a-c) et la trajectoire de faisceau différente (11d) coïncidant sensiblement l'une avec l'autre dans un plan (16) de la cible (28).

3. Système de rayonnement électromagnétique (10) selon la revendication 1 ou la revendication 2, dans lequel la trajectoire de faisceau de marquage (11a-c) varie pour tracer un motif de faisceau de marquage (30) sur le plan (16) de la cible (28),
et facultativement
dans lequel le motif de faisceau de marquage (30) est un anneau.

4. Système de rayonnement électromagnétique (10) selon l'une quelconque des revendications 1 à 3, comprenant un deuxième élément optique mobile (100B), dans lequel le deuxième élément optique mobile (100B) comprend une première configuration qui amène le faisceau de rayonnement (11) à suivre la trajectoire de faisceau de marquage (11a-c) et une deuxième configuration (11d) qui amène le faisceau de rayonnement (11) à suivre la trajectoire de faisceau différente (11d),
et facultativement
dans lequel le deuxième élément optique mobile (100B) est entraîné par l'actionneur (A, B) et l'actionneur est configuré pour entraîner le premier élément optique (100A) entre les première et deuxième configurations à une fréquence d'environ 20 Hz ou plus.

5. Système de rayonnement électromagnétique (10) selon la revendication 4, dans lequel le premier élément optique mobile (100A) et/ou le deuxième élément optique mobile (100B) fait partie d'un mécanisme de direction électromagnétique (12) du système de rayonnement électromagnétique (10).

6. Système de rayonnement électromagnétique (10) selon l'une quelconque des revendications 1 à 5, comprenant un troisième élément optique (15) situé à l'extérieur de la trajectoire de faisceau de marquage (11a-c) et à l'intérieur de la trajectoire de faisceau différente (11d),
et facultativement
dans lequel le troisième élément optique (15) est fixe.

7. Système de rayonnement électromagnétique (10) selon l'une quelconque des revendications 1 à 6, dans lequel le faisceau de rayonnement (11) comprend une longueur d'onde visible,
et facultativement
dans lequel la longueur d'onde visible correspond à une lumière verte.

8. Système de rayonnement électromagnétique (10) selon l'une quelconque des revendications 1 à 7, dans lequel une source du faisceau de rayonnement (11) est couplée optiquement à une première extrémité d'une fibre optique (130) et le système de rayonnement électromagnétique (10) est couplé optiquement à une deuxième extrémité de la fibre optique (130).

9. Système de rayonnement électromagnétique (10) selon l'une quelconque des revendications 1 à 8, comprenant une caméra (40) configurée pour surveiller la relation de position entre la trajectoire de faisceau de marquage (11a-c) et la trajectoire de faisceau différente (11d).

10. Système comprenant le système de rayonnement électromagnétique (10) selon la revendication 9 et un dispositif de réglage de position de système de rayonnement électromagnétique (45) configuré pour recevoir de la caméra (40) des informations relatives à la relation de position entre la trajectoire de faisceau de marquage (11a-c) et la trajectoire de faisceau différente (11d) et utiliser les informations pour régler une position du système de rayonnement électromagnétique (10) jusqu'à ce que la condition prédéterminée soit satisfaite.

11. Procédé d'étalonnage d'un système de rayonnement électromagnétique (10) pour diriger un faisceau de rayonnement électromagnétique (11) sur une cible (28) ayant un premier agencement dans lequel le faisceau de rayonnement (11) est dirigé le long d'une trajectoire de faisceau de marquage (11a-c) qui se trouve à l'intérieur d'une plage de marquage du système de rayonnement électromagnétique (10) et un deuxième agencement dans lequel le faisceau de rayonnement (11) est dirigé le long d'une trajectoire de faisceau différente (11d) qui ne se trouve pas à l'intérieur de la plage de marquage du système de rayonnement électromagnétique (10), dans lequel une relation de position entre la trajectoire de faisceau de marquage (11a-c) et la trajectoire de faisceau différente (11d) satisfait une condition prédéterminée au niveau de la cible (28) lorsque le système de rayonnement électromagnétique (10) se trouve à une distance prédéterminée (29) de la cible (28),
**caractérisé en ce que** le système de rayonnement électromagnétique (10) comprend :
un premier élément optique mobile (100A) comprenant une première configuration qui amène le faisceau de rayonnement (11) à suivre la trajectoire de faisceau de marquage (11a-c) et une deuxième configuration qui amène le faisceau de rayonnement (11) à suivre la trajectoire de faisceau différente (11d), et
un actionneur (A, B) configuré pour entraîner le premier élément optique (100A) entre les première et deuxième configurations,
et **en ce que** le procédé comprend les étapes suivantes :
la détermination de la distance prédéterminée (29) ;
la détermination de la relation de position entre la trajectoire de faisceau de marquage (11a-c) et la trajectoire de faisceau différente (11d) à la distance prédéterminée (29) ;
la détermination de données de configuration en fonction de la relation de position ; et
le stockage des données de configuration en mémoire.

12. Procédé selon la revendication 11, dans lequel le système de rayonnement électromagnétique (10) comprend un deuxième élément optique mobile (100B), dans lequel le deuxième élément optique mobile (100A) comprend une première configuration qui amène le faisceau de rayonnement (11) à suivre la trajectoire de faisceau de marquage (11a-c) et une deuxième configuration qui amène le faisceau de rayonnement (11) à suivre la trajectoire de faisceau différente (11d), et dans lequel les données de configuration comprennent les première et deuxième configurations du premier élément optique (100A) et/ou du deuxième élément optique (100B) qui amènent la condition prédéterminée à être satisfaite.

13. Procédé selon la revendication 11 ou la revendication 12, dans lequel :
la détermination de la distance prédéterminée (29) comprend la mesure d'une longueur focale du système de rayonnement électromagnétique (10),
et/ou
la détermination de la relation de position entre la trajectoire de faisceau de marquage (11a-c) et la trajectoire de faisceau différente (11d) à la distance prédéterminée (29) comprend le réglage de la première et/ou de la deuxième configuration du premier élément optique mobile (100A) et/ou du deuxième élément optique mobile (100B) jusqu'à ce que la trajectoire de faisceau de marquage (11a-c) et la trajectoire de faisceau différente (11d) coïncident sensiblement l'une avec l'autre à la distance prédéterminée (29).

14. Procédé de positionnement d'un système de rayonnement électromagnétique (10) à une distance prédéterminée (29) à l'écart d'une cible (28) comprenant :
l'agencement du système de rayonnement électromagnétique (10) selon un premier agencement dans lequel le faisceau de rayonnement (11) est dirigé le long d'une trajectoire de faisceau de marquage (11a-c) qui se trouve à l'intérieur d'une plage de marquage du système de rayonnement électromagnétique (10) ;
l'agencement du système de rayonnement électromagnétique (10) selon un deuxième agencement dans lequel le faisceau de rayonnement (11) est dirigé le long d'une trajectoire de faisceau différente (11d) qui ne se trouve pas à l'intérieur de la plage de marquage du système de rayonnement électromagnétique (10) ;
la surveillance d'une relation de position entre la trajectoire de faisceau de marquage (11a-c) et la trajectoire de faisceau différente (11d) tout en réglant une distance entre le système de rayonnement électromagnétique (10) et la cible (28) ; et
l'arrêt du réglage de la distance entre le système de rayonnement électromagnétique (10) et la cible (28) lorsque la relation de position satisfait une condition prédéterminée,
**caractérisé en ce que** le système de rayonnement électromagnétique (10) comprend :
un premier élément optique mobile (100A) comprenant une première configuration qui amène le faisceau de rayonnement (11) à suivre la trajectoire de faisceau de marquage (11a-c) et une deuxième configuration qui amène le faisceau de rayonnement (11) à suivre la trajectoire de faisceau différente (11d), et
un actionneur (A, B) configuré pour entraîner le premier élément optique (100A) entre les première et deuxième configurations.

15. Procédé de marquage d'un produit (28) **caractérisé par** l'utilisation du système de rayonnement électromagnétique (10) selon l'une quelconque des revendications 1 à 10.
